(19) **Europäisches Patentamt / European Patent Office / Office européen des brevets**

(11) **EP 4 583 049 A1**

(12) **EUROPEAN PATENT APPLICATION**
published in accordance with Art. 153(4) EPC

(43) Date of publication:
09.07.2025 Bulletin 2025/28

(21) Application number: 23860868.1

(22) Date of filing: 30.08.2023

(51) International Patent Classification (IPC):
$G06T\ 7/11^{(2017.01)}$   $G06T\ 7/174^{(2017.01)}$
$G06T\ 7/00^{(2017.01)}$   $G06V\ 20/69^{(2022.01)}$
$G06N\ 3/08^{(2023.01)}$   $G06T\ 7/62^{(2017.01)}$

(52) Cooperative Patent Classification (CPC):
G06N 3/08; G06T 7/00; G06T 7/11; G06T 7/174;
G06T 7/62; G06V 20/69

(86) International application number:
PCT/KR2023/012865

(87) International publication number:
WO 2024/049192 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.08.2022 KR 20220109288
11.11.2022 KR 20220150599
20.04.2023 KR 20230052215
29.08.2023 KR 20230113481

(71) Applicant: Korea Advanced Institute of Science
and Technology
Daejeon 34141 (KR)

(72) Inventors:
- CHANG, JaeByum
  Daejeon 34141 (KR)
- YOON, Young-Gyu
  Daejeon 34141 (KR)
- KIM, Hyunwoo
  Daejeon 34141 (KR)
- BAE, Seoungbin
  Daejeon 34141 (KR)
- CHO, Junmo
  Daejeon 34141 (KR)

(74) Representative: Keller Schneider
Patent- und Markenanwälte AG
Eigerstrasse 2
Postfach
3000 Bern 14 (CH)

(54) **IMAGE PROCESSING DEVICE AND METHOD USING ARTIFICIAL NEURAL NETWORK MODEL**

(57)  As one aspect disclosed herein, an image processing method may be proposed. The method is executed in an electronic device comprising one or more processors and one or more memories for storing instructions to be executed by the one or more processors, and may comprise the steps of: acquiring a plurality of mixed images of a sample including a plurality of biological molecules; and generating unmixed images of at least one of the plurality of biological molecules from the plurality of mixed images by using an unmixing matrix. The value of at least one element included in the unmixing matrix may be determined on the basis of artificial neural network model training.

FIG. 5

EP 4 583 049 A1

**Description**

TECHNICAL FIELD

The present disclosure relates to technology for processing an image using an artificial neural network model.

RELATED ART

A fluorescent imaging technique for biological samples refers to a technique that may label a biomolecule contained in a sample with a fluorescent substance and then photograph light emitted from the fluorescent substance to indirectly observe biological substances inside the sample. When the light is irradiated to the fluorescent substance, the fluorescent substance absorbs the light, is excited, and then emits the light again. Here, the fluorescent substance emits light with a longer wavelength than the absorbed light. For example, the fluorescent substance absorbs light in a specific wavelength range (e.g., 350 to 400 nm) and emits light in a specific wavelength range (e.g., 400 to 600 nm). Here, indicating the degree to which the fluorescent substance is excited for each wavelength is called excitation spectrum, and indicating intensity of light emitted for each wavelength is called emission spectrum.

Two major limitations are present in the art. The first limitation is that fluorescent substances of which emission spectra do not overlap as much as possible need to be used to observe a plurality of biomolecules contained in a sample and accordingly, the number of simultaneously available fluorescent substances is limited to 3 to 5. A process of labeling biomolecules inside the sample with three to five different fluorescent substances for imaging and then deactivating the fluorescent substances or removing the labeled biomolecules and then labeling other biomolecules inside the sample using the same fluorescent substances needs to be repeated to observe 10 or more biomolecules using the limited number of fluorescent substances. The second limitation is that chemical, optical, or physical treatment used in the process of deactivating or removing fluorescent substances may distort the sample or may damage the biomolecules inside the sample.

DETAILED DESCRIPTION

TECHNICAL SUBJECT

The present disclosure provides technology for processing an image based on an artificial neural network model.

TECHNICAL SOLUTION

As an aspect of the present disclosure, an image processing method may be proposed. The method is an image processing method performed by an electronic device including at least one processor and at least one memory that stores instructions to be executed by the at least one processor, and may include acquiring a plurality of mixed images for a sample that contains a plurality of biomolecules; and generating a unmixed image for at least one biomolecule among the plurality of biomolecules from the plurality of mixed images using an unmixing matrix. A value of at least one element included in the unmixing matrix may be determined based on training of an artificial neural network model.

In an example embodiment, the unmixing matrix may include at least one element that determines a linear superposition ratio between the plurality of mixed images.

In an example embodiment, the number of rows of the unmixing matrix may be the same as the number of the plurality of mixed images.

In an example embodiment, the unmixing matrix may be a square matrix in which the number of rows and the number of columns are the same.

In an example embodiment, the plurality of mixed images may be a plurality of mixed images acquired in consecutive rounds when repeating a single round that includes a process of labeling a biomolecule in the sample with a fluorescent substance and then acquiring an mixed image, and the unmixing matrix may be a triangular matrix.

In an example embodiment, the plurality of mixed images may be two or more mixed images acquired in different wavelength ranges after labeling two or more biomolecules contained in the sample with fluorescent substances of which emission spectra overlap, respectively.

In an example embodiment, the artificial neural network model may be trained using two or more data sets generated based on a plurality of unmixed images generated using the unmixing matrix.

In an example embodiment, a first data set included in the two or more data sets may include at least one piece of data that includes values of pixels corresponding to the same location in each of the plurality of unmixed images.

In an example embodiment, a second data set included in the two or more data sets may include at least one piece of data that includes values of pixels corresponding to a random location (coordinates) from each of the plurality of unmixed images.

In an example embodiment, the artificial neural network model may be trained to distinguish two or more data sets generated based on a plurality of unmixed images generated using the unmixing matrix.

In an example embodiment, the artificial neural network model may generate a classification value for classifying input specific data into one of the two or more data sets.

In an example embodiment, the artificial neural network model may receive first input data and second input data, and may generate a dependency evaluation value for the plurality of unmixed images based on the first input data and the second input data.

In an example embodiment, the first input data may include at least one piece of data included in the first data set.

In an example embodiment, the second input data may include at least one piece of data included in the second data set.

In an example embodiment, the dependency evaluation value may be at least one of distinguishing capability between the first input data and the second input data or a loss function value of the artificial neural network model.

In an example embodiment, the unmixing matrix and the artificial neural network model may be trained through adversarial training.

In an example embodiment, the unmixing matrix may be trained by additionally using a specific loss function that prevents a value of each pixel of a unmixed image from being negative.

In an example embodiment, the unmixing matrix and the artificial neural network model may be trained through adversarial training, a value of at least one element included in the unmixing matrix may be updated to increase accuracy of the classification value generated by the artificial neural network model, and a value of at least one parameter included in the artificial neural network model may be updated to decrease the accuracy of the classification value.

In an example embodiment, the unmixing matrix and the artificial neural network model may be trained through adversarial training, a value of at least one element included in the unmixing matrix may be updated to decrease accuracy of the classification value generated by the artificial neural network model, and a value of at least one parameter included in the artificial neural network model may be updated to increase the accuracy of the classification value.

In an example embodiment, the unmixing matrix and the artificial neural network model may be trained through adversarial training, a value of at least one element included in the unmixing matrix may be updated to decrease the dependency evaluation value generated by the artificial neural network model, and a value of at least one parameter included in the artificial neural network model may be updated to increase the dependency evaluation value.

In an example embodiment, the unmixing matrix and the artificial neural network model may be trained through adversarial training, a value of at least one element included in the unmixing matrix may be updated to increase the dependency evaluation value generated by the artificial neural network model, and a value of at least one parameter included in the artificial neural network model may be updated to decrease the dependency evaluation value.

In an example embodiment, the method may further include performing pixel binning processing on each of the plurality of mixed images.

In an example embodiment, the artificial neural network model may be trained based on a plurality of pixel binning processed unmixed images acquired by performing pixel binning processing on a plurality of unmixed images generated by the unmixing matrix, respectively.

According to another aspect of the present disclosure, an electronic device for image processing may be proposed. The electronic device may include at least one processor; and at least one memory configured to store instructions to be executed by the at least one processor, the at least one processor may be configured to acquire a plurality of mixed images for a sample that contains a plurality of biomolecules, and to generate a unmixed image for at least one biomolecule among the plurality of biomolecules from the plurality of mixed images using an unmixing matrix, and a value of at least one element included in the unmixing matrix may be determined based on training of an artificial neural network model.

In an example embodiment, the unmixing matrix may include at least one element that determines a linear superposition ratio between the plurality of mixed images.

In an example embodiment, the artificial neural network model may be trained to distinguish two or more data sets generated based on a plurality of unmixed images generated using the unmixing matrix.

In an example embodiment, the unmixing matrix and the artificial neural network model may be trained through adversarial training.

As still another aspect of the present disclosure, a non-transitory computer-readable recording medium storing instructions for image processing may be provided. In the non-transitory computer-readable recording medium storing instructions that cause the at least one processor to perform an operation, the instructions cause the at least one processor to perform acquiring a plurality of mixed images for a sample that contains a plurality of biomolecules; and generating a unmixed image for at least one biomolecule among the plurality of biomolecules from the plurality of mixed images using an unmixing matrix. A value of at least one element included in the unmixing matrix may be determined based on training of an artificial neural network model.

EFFECT

An image processing method according to the present disclosure may significantly improve accuracy of image unmixing.

BRIEF DESCRIPTION OF DRAWINGS

FIG. 1 is a diagram illustrating a system that includes a server, a user terminal, and a communication network according to an example embodiment of the present disclosure.

FIG. 2 is a block diagram illustrating a server according to an example embodiment of the disclosure of the present specification.

FIG. 3 is a block diagram of a user terminal according to an example embodiment of the disclosure of the present specification.

FIG. 4 illustrates an example of features of a fluorescent substance used to label a biomolecule in a conventional image processing method.

FIG. 5 conceptually illustrates a process of generating a plurality of unmixed images from a plurality of mixed images according to an example embodiment of the present disclosure.

FIG. 6 is a flowchart illustrating an operation of a server that generates a unmixed image for at least one biomolecule among a plurality of biomolecules using an unmixing matrix from a plurality of mixed images related to a sample according to an example embodiment of the present disclosure.

FIG. 7 is a flowchart illustrating an operation of a server that updates a value of an element included in an unmixing matrix and/or an artificial neural network model according to an example embodiment of the present disclosure.

FIG. 8 conceptually illustrates a process of acquiring a dependency evaluation value between a plurality of unmixed images based on an artificial neural network model according to an example embodiment of the present disclosure.

FIG. 9 conceptually illustrates a plurality of unmixed images generated from an unmixing matrix according to an example embodiment of the present disclosure.

FIG. 10 is a flowchart illustrating an operation of a server that generates a pixel value ordered pair at the same location based on values of pixels at the same location included in each of a plurality of unmixed images according to an example embodiment of the present disclosure.

FIG. 11 is a flowchart illustrating an operation of a server that generates a pixel value ordered pair based on values of pixels corresponding to a random location (coordinates) from each of a plurality of unmixed images according to an example embodiment of the present disclosure.

FIG. 12 conceptually illustrates a process of acquiring a dependency evaluation value between a plurality of unmixed images based on an artificial neural network model according to another example embodiment of the present disclosure.

FIG. 13 conceptually illustrates a process of consecutively and sequentially acquiring a plurality of mixed images by repeating one round that includes a process of acquiring an mixed image after labeling a biomolecule contained in a sample with a fluorescent substance according to an example embodiment of the present disclosure.

FIG. 14 conceptually illustrates a method of acquiring a unmixed image for at least one biomolecule from two mixed images acquired through consecutive rounds among a plurality of mixed images acquired through a plurality of rounds according to an example embodiment of the present disclosure.

FIG. 15 conceptually illustrates a method of acquiring a unmixed image for two or more biomolecules from three mixed images acquired through consecutive three rounds among a plurality of mixed images acquired in a consecutive and sequential manner according to an example embodiment of the present disclosure.

FIG. 16 is a flowchart illustrating an operation of a server that generates a unmixed image for at least one biomolecule based on two mixed images acquired in a consecutive and sequential manner according to an example embodiment of the present disclosure.

FIG. 17 is a graph showing an example of emission spectra of a plurality of fluorescent substances and a wavelength range in which a specific emission filter passes light.

FIG. 18 is a graph showing an example of emission spectra of a plurality of fluorescent substances and a wavelength value at which intensity of a signal is maximum in each emission spectrum.

FIG. 19 is a graph showing an example of fluorescent substances available when acquiring two or more mixed images by labeling two or more biomolecules contained in a sample with two or more fluorescent substances of which emission spectra overlap in one staining and imaging round, and characteristics of wavelength ranges available to acquire the mixed images according to an example embodiment of the present disclosure.

FIG. 20 conceptually illustrates a method of acquiring a unmixed image for at least one biomolecule from two or more mixed images acquired by labeling two or more biomolecules contained in a sample with two or more fluorescent substances of which emission spectra overlap in one staining and imaging round according to an example embodiment of the present disclosure. MODE

Various example embodiments described herein are provided for the purpose of clearly describing the technical spirit of the present disclosure and are not intended to limit the same to specific implementation. The technical spirit of the present disclosure includes various modifications, equivalents, and alternatives of each example embodiment described herein and embodiments selectively combined from all or some of each example embodiment. Also, the scope of rights of the technical spirit of the present disclosure is not limited to various example embodiments or detailed description related thereto provided below.

Unless defined otherwise, terms used herein including technical or scientific terms may have meanings commonly understood by one of ordinary skill in the art to which the present disclosure pertains.

Expressions, such as "comprises/includes," "may comprise/include," "provides," "may provide," "has," and "may have" used herein, may indicate that target features (e.g., function, operation, or component) are present and does not exclude presence of other additional features. That is, such expressions should be understood as open-ended terms that imply possibility of including other example embodiments.

The singular forms used herein are intended to include the plural forms as well, unless the context clearly indicates otherwise, which also applies to the singular forms described in the claims.

Unless the context clearly indicates otherwise, the terms "first," "second," etc., used herein are used to distinguish one component from another component when referring to a plurality of homogeneous components and are not intended to limit order or importance between the corresponding components. For example, a plurality of fluorescent substances according to the present disclosure may be distinguished from each other by being expressed as "first fluorescent substance" and "second fluorescent substance." Also, a plurality of input images according to the present disclosure may be distinguished from each other by being expressed as "first input image," "second input image," and the like. Likewise, terms used herein, such as "biomolecule," "unmixed image," and "probability distribution," may be distinguished from each other by expressions such as "first" and "second."

As used herein, expressions such as "A, B, and C," "A, B, or C," "at least one of A, B, and C," and "at least one of A, B, or C" may include any possible combinations of listed items. For example, "at least one of A or B" may refer to all of (1) at least one A, (2) at least one B, and (3) at least one A and at least one B.

The expression "unit" used herein may refer to software or a hardware component such as field-programmable gate array (FPGA) and application specific integrated circuit (ASIC). However, "unit" is not limited to hardware and software. "Unit" may be configured to be stored in an addressable storage medium and may also be configured to execute one or more processors. In an example embodiment, "unit" may include components such as software components, object-oriented software components, class components, and task components, processors, functions, attributes, procedures, subroutines, segments of a program code, drivers, firmware, microcode, circuits, data, databases, data structures, tables, arrays, and variables.

As used herein, the expression "based on" is used to describe at least one factor that affects a decision, an act of decision, or an action thereof, described in a phrase or sentence including the expression. This expression does not exclude an additional factor that affects the corresponding decision, the act of decision, or the action thereof.

As used herein, the expression that a component (e.g., first component) is "connected to" or "accessed to" another component (e.g., second component), it may indicate that the component is directly connected to or accessed to the other component and is connected to or accessed to the other component through new, still another component (e.g., third component).

As used herein, the expression "~configured to" may have meaning such as "~set to," "having the ability of~," "changed to~," "made to~," and "capable of~." The corresponding expression is not limited to the meaning of "specially designed in a hardware manner." For example, a processor configured to perform a specific operation may indicate a generic purpose processor capable of performing the specific operation by executing software, or may indicate a special purpose computer structured through programming to perform the specific operation.

In the present disclosure, artificial intelligence (AI) refers to technology for imitating learning ability, inference ability, and reasoning ability of human and implementing the same with a computer, and may include the concept of machine learning and symbolic logic. Machine learning (ML) refers to algorithm technology that classifies or learns features of input data on its own. Artificial intelligence technology refers to a machine learning algorithm, and may analyze input data, may learn analysis results, and may make a decision or prediction based on learning results. Also, technologies that imitate cognitive and judgement functions of the human brain using the machine learning algorithm may be understood as the category of artificial intelligence. For example, the technical fields may be included, such as linguistic understanding, visual understanding, reasoning/prediction, knowledge representation, and motion control.

In the present disclosure, machine learning may represent a process of training an artificial neural network model using data processing experience. Through machine learning, computer software may improve data processing capability on its own. The artificial neural network model is built by modeling the statistical distribution of data and a corresponding correlation may be expressed using a plurality of parameters. The artificial neural network model extracts and analyzes features from given data to derive a correlation between data. Optimizing parameters of the artificial neural network model by repeating this process may be machine learning. For example, the artificial neural network model may learn mapping between input and output for data that is given as input-output pairs. Alternatively, although only input data is given, the artificial neural network model may derive regularity between the given data and may learn a relationship therebetween.

In the present specification, an artificial neural network, an artificial intelligence learning model, a machine learning model, or an artificial neural network model may be designed to implement the human brain structure on a computer and may include a plurality of network nodes that simulate neurons of a human neural network and have weights. The plurality of network nodes may have a connection between each other by simulating the synaptic activity of neurons that exchange signals through synapses. In the artificial neural network, the plurality of network nodes may be present in layers of different depths and may exchange data according to convolution connection. The artificial neural network may be, for example, an artificial neural network model and a convolution neural network model.

Hereinafter, various example embodiments of the present disclosure are described with reference to the accompanying drawings. In the accompanying drawings and description thereof, like reference numerals may be assigned to like or substantially equivalent components. Also, in describing various example embodiments below, duplicate description of the same or corresponding component may be omitted, but this does not indicate that the corresponding component is not included in the example embodiment.

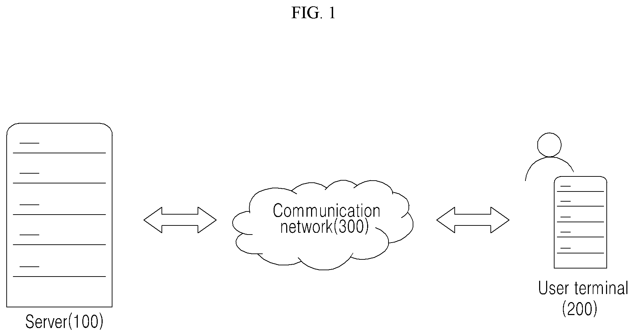

FIG. 1 is a diagram illustrating a system that includes a server 100, a user terminal 200, and a communication network 300 according to an example embodiment of the present disclosure. The server 100 and the user terminal 200 may exchange information through the communication network 300.

The server 100 may be an electronic device that performs an image processing operation according to the present disclosure. The server 100 refers to an electronic device that transmits information or image processing results to the user terminal 200 connected in a wired or wireless manner, for example, an application server, a proxy server, and a cloud server.

The user terminal 200 may be a terminal of a user that desires to receive the image processing results. The user terminal 200 may include, for example, at least one of a smartphone, a table computer, a personal computer (PC), a mobile phone, a personal digital assistant (PDA), an audio player, and a wearable device. The communication network 300 may include all of wired and wireless communication networks.

The communication network 300 may allow data to be exchanged between the server 100 and the user terminal 200. The wired communication network may include a communication network according to, for example, a Universal Serial Bus (USB), a High Definition Multimedia Interface (HDM), Recommended Standard-232 (RS-232), and Plain Old Telephone Service (POTS). The wireless communication network may include a communication network according to, for example, enhanced Mobile Broadband (eMBB), Ultra Reliable Low-Latency Communications (URLLC), Massive Machine Type Communications (MMTC), Long-Term Evolution (LTE), LTE Advance (LTE-A), New Radio (NR), Universal Mobile Telecommunications System (UMTS), Global System for Mobile communications (GSM), Code Division Multiple Access (CDMA), Wideband CDMA (WCDMA), Wireless Broadband (WiBro), Wireless Fidelity (WiFi), Bluetooth, Near Field Communication (NFC), Global Positioning System (GPS), and Global Navigation Satellite System (GNSS). The communication network 300 of the present specification is not limited to the aforementioned examples and may include various types of communication networks that allow data to be exchanged between a plurality of entities or devices.

When describing a configuration or an operation of one device in the disclosure of the present specification, the term "device" may be used as a term indicating a device that is to be described and the term "external device" may be used as a term indicating a device present outside from perspective of the device that is to be described. For example, when describing the server 100 as "device," the user terminal 200 may be referred as "external device" from perspective of the server 100. Also, for example, when describing the user terminal 200 as "device," the server 100 may be referred to as "external device" from perspective of the user terminal 200. That is, the server 100 and the user terminal 200 may be referred to as "device" and "external device," respectively, or may be referred to as "external device" and "device," respectively, depending on perspective of an operating entity.

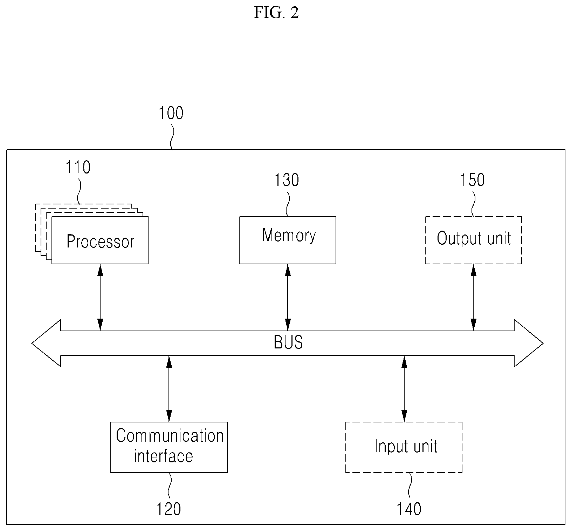

FIG. 2 is a block diagram of the server 100 according to an example embodiment of the disclosure of the present specification. The server 100 may include at least one processor 110, a communication interface 120, or a memory 130 as a component. In some example embodiments, at least one of the components of the server 100 may be omitted, or another component may be added to the server 100. In some example embodiments, in addition thereto or in alternative thereto, some components may be integrated and implemented or may be implemented as a single entity or a plurality of entities. At least some components among components inside or outside the server 100 may exchange data or signals through interconnection using a bus, General Purpose Input/Output (GPIO), Serial Peripheral Interface (SPI), or Mobile Industry Processor Interface (MIPI).

At least one processor 110 may be expressed as the processor 110. The term "processor 110" may represent a set of one or more processors unless the context clearly indicates otherwise. The processor 110 may control at least one component of the server 100 connected to the processor 110 by executing software (e.g., instruction, program, etc.). Also, the processor 110 may perform operations, such as various arithmetic, processing, and data generation or processing operations. Also, the processor 110 may load data from the memory 130 or may store the data in the memory 130.

The communication interface 120 may perform wireless or wired communication between the server 100 and another device (e.g., user terminal 200 or another server). For example, the communication interface 120 may perform wireless communication according to a method such as eMBB, URLLC, MMTC, LTE, LTE-A, NR, UMTS, GSM, CDMA, WCDMA, WiBro, WiFi, Bluetooth, NFC, GPS, or GNSS. Also, for example, the communication interface 120 may perform wired communication according to a method such as USB, HDMI, RS-232, or POTS.

The memory 130 may store a variety of data. Data stored in the memory 130 refers to data acquired, processed, or used by at least one component of the server 100 and may include software (e.g., instruction and program). The memory 130 may include a volatile or non-volatile memory. Unless the context clearly indicates otherwise, the term "memory 130" may indicate a set of one or more memories. Herein, the expression "set of instructions stored in the memory 130" or "program stored in the memory 130" may be used to refer to an operating system and an application for controlling resources of the server 100, middleware that provides various functions to the application such that the application may use resources of the server 100, and the like. In an example embodiment, when the processor 110 performs a specific operation, the memory 130 may store instructions performed by the processor 110 and corresponding to the specific operation.

In an example embodiment, the server 100 may transmit data according to operation results of the processor 110, data received by the communication interface 120, or data stored in the memory 130 to the external device. The external device may be a device for expressing, displaying, or outputting the received data.

In an example embodiment, the server 100 may further include an input unit 140. The input unit 140 may be a component that delivers data received from outside to at least one component included in the server 100. For example, the input unit 140 may include at least one of a mouse, a keyboard, and a touchpad.

In an example embodiment, the server 100 may further include an output unit 150. The output unit 150 may display (output) information processed by the server 100, or may transmit (send) the information to the outside. For example, the output unit 150 may visually display information processed by the server 100. The output unit 150 may display user interface (UI) information or graphic user interface (GUI) information. In this case, the output unit 150 may include at least one of a liquid crystal display (LCD), a thin film transistor-liquid crystal display (TFT-LCD), an organic light-emitting diode (OLED), a flexible display, a 3D display, and an E-ink display. Also, the output unit 150 may auditorily display information processed by the server 100. The output unit 150 may display audio data that follows an arbitrary audio file format (e.g., MP3, FLAC, WAV) method through an audio device. In this case, the output unit 150 may include at least one of a speaker, a headset, and a headphone. Also, for example, the output unit 150 may transmit information processed by the server 100 to an external output device. The output unit 150 may transmit or send information processed by the server 100 to the external output device using the communication interface 120. The output unit 150 may transmit or send information processed by the server 100 to the external output device using a separate output communication interface.

In an example embodiment, the server 100 may further include a photographing unit (not shown). The photographing unit may be, for example, a camera or a camera equipped with a microscope device. Also, the photographing unit may include, for example, any device capable of irradiating light to a sample and acquiring light emitted from the sample as an image. The processor 110 may capture an image of a target (e.g., sample) by controlling the photographing unit and may acquire the captured image or may store the same in the memory 130. Alternatively, when the server 100 includes the output unit 150, the processor 110 may control the photographing unit to capture the image of the target and to display the captured image on the output unit 150. In another example embodiment, the server 100 may also acquire the captured image from an external photographing device.

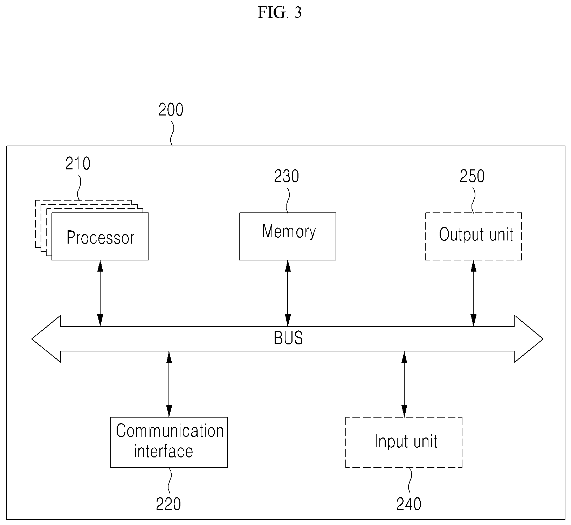

FIG. 3 is a block diagram of a user terminal 200 according to an example embodiment of the disclosure of the present specification. The user terminal 200 may include at least one processor 210, a communication interface 220, or a memory 230 as a component. Also, the user terminal 200 may further include at least one of an input unit 240 and an output unit 250.

The processor 210 may control at least one component of the user terminal 200 connected to the processor 110 by executing software (e.g., instruction, program, etc.). Also, the processor 210 may perform operations, such as various arithmetic, processing, and data generation or processing operations. Also, the processor 210 may load data from the memory 230 or may store the data in the memory 230.

The communication interface 220 may perform wireless or wired communication between the user terminal 200 and another device (e.g., server 100 or another user terminal). For example, the communication interface 220 may perform wireless communication according to a method such as eMBB, URLLC, MMTC, LTE, LTE-A, NR, UMTS, GSM, CDMA, WCDMA, WiBro, WiFi, Bluetooth, NFC, GPS, or GNSS. Also, for example, the communication interface 220 may perform wired communication according to a method such as USB, HDMI, RS-232, or POTS.

The memory 230 may store a variety of data. Data stored in the memory 230 refers to data acquired, processed, or used by at least one component of the user terminal 200 and may include software (e.g., instruction and program). The memory 230 may include a volatile or non-volatile memory. Unless the context clearly indicates otherwise, the term "memory 230" may indicate a set of one or more memories. Herein, the expression "set of instructions stored in the memory 230" or "program stored in the memory 230" may be used to refer to an operating system and an application for controlling resources of the user terminal 200, middleware that provides various functions to the application such that the application may use resources of the user terminal 200, and the like. In an example embodiment, when the processor 210 performs a specific operation, the memory 230 may store instructions performed by the processor 210 and corresponding to the specific operation.

In an example embodiment, the user terminal 200 may further include the input unit 240. The input unit 240 may be a component that delivers data received from outside to at least one component included in the user terminal 200. For example, the input unit 240 may include at least one of a mouse, a keyboard, and a touchpad.

In an example embodiment, the user terminal 200 may further include the output unit 250. The output unit 250 may display (output) information processed by the user terminal 200, or may transmit (send) the information to the outside. For example, the output unit 250 may visually display information processed by the user terminal 200. The output unit 250 may display user interface (UI) information or graphic user interface (GUI) information. In this case, the output unit 250 may include at least one of an LCD, a TFT-LCD, an OLED, a flexible display, a 3D display, and an E-ink display. Also, for example, the output unit 250 may auditorily display information processed by the user terminal 200. The output unit 250 may display audio data that follows an arbitrary audio file format (e.g., MP3, FLAC, WAV) method through an audio device. In this case, the output unit 250 may include at least one of a speaker, a headset, and a headphone. Also, for example, the output unit 250 may transmit information processed by the user terminal 200 to the external output device. The output unit 250 may transmit information processed by the user terminal 200 to the external output device using the communication interface 220. The output unit 250 may transmit or send information processed by the user terminal 200 to the external output device using a separate output communication interface.

In an example embodiment, the user terminal 200 may further include a photographing unit (not shown). The photographing unit may be, for example, a camera or a camera equipped with a microscope device. Also, the photographing unit may include, for example, any device capable of irradiating light to a sample and acquiring light emitted from the sample as an image. The processor 210 may capture an image of a target (e.g., sample) by controlling the photographing unit and may acquire the captured image or may store the same in the memory 230. The user terminal 200 may display the captured image on the output unit 250. The user terminal 200 may transmit the captured image to the server 100. Also, the user terminal 200 may also acquire the captured image from an external photographing device.

In the following description, an operating entity may be omitted for clarity of description. However, in this case, each of operations may be understood to be performed by the server 100. However, the method according to the present disclosure may be performed by the user terminal 200, and some of operations included in the method may be performed by the user terminal 200 and the rest may be performed by the server 100.

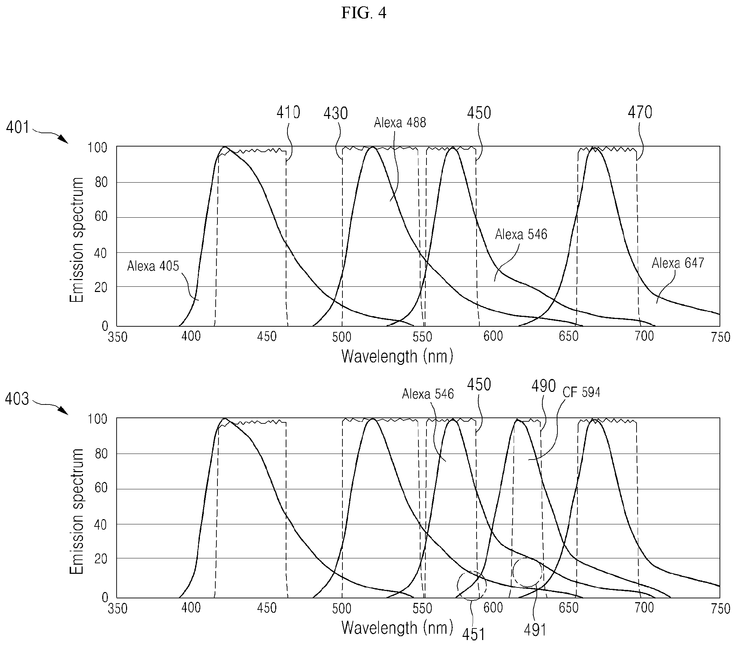

FIG. 4 illustrates an example of features of a fluorescent substance used to label a biomolecule in a conventional image processing method. In general, to observe a plurality of biomolecules in a single biological sample, there is a need to label the plurality of biomolecules with different fluorescent substances and then to individually acquire an image for each biomolecule. Herein, the biological sample may be simply referred to as "sample." An image for each biomolecule contained in the sample may be acquired, for example, by irradiating light of a specific wavelength to which a fluorescent substance responds, by filtering light emitted from the resulting excited fluorescent substance through a corresponding emission filter, and by photographing light that the emission filter passes. Herein, the "emission filter" may be a device that passes light in a specific wavelength range and may be a filter, diffraction grating, a prism, or an acousto-optic tunable filter.

A first graph 401 regarding an emission spectrum of light emitted by a fluorescent substance shows emission spectra of a plurality of fluorescent substances (Alexa 405, Alexa 488, Alexa 546, and Alexa 647).

The fluorescent substance "Alexa 405" may be a fluorescent substance that absorbs light in a specific wavelength range and then emits light with a wavelength between about 400 nm and 500 nm. An image for a biomolecule stained with the fluorescent substance "Alexa 405" may be acquired by filtering the light emitted from the fluorescent substance "Alexa 405" through a first emission filter and by photographing light in a wavelength range 410 that the first emission filter passes. The wavelength range 410 in which the first emission filter passes the light may be, for example, greater than or equal to 470 nm and less than or equal to 520 nm.

The fluorescent substance "Alexa 488" may be a fluorescent substance that absorbs light in a specific wavelength range and then emits light with a wavelength between about 500 nm and 600 nm. Here, an image for a biomolecule stained with the fluorescent substance "Alexa 488" may be acquired by filtering the light emitted from the fluorescent substance "Alexa 488" through a second emission filter and by photographing the light in a wavelength range 430 that the second emission filter passes. The wavelength range 430 in which the second emission filter passes the light may be, for example, greater than or equal to 500 nm and less than or equal to 560 nm.

The fluorescent substance "Alexa 546" may be a fluorescent substance that absorbs light in a specific wavelength range and then emits light with a wavelength between about 550 nm and 650 nm. Here, an image for a biomolecule stained with the fluorescent substance "Alexa 546" may be acquired by filtering the light emitted from the fluorescent substance "Alexa 546" through a third emission filter and by photographing the light in a wavelength range 450 that the third emission filter passes. The wavelength range 450 in which the third emission filter passes the light may be, for example, greater than or equal to 565 nm and less than or equal to 590 nm.

The fluorescent substance "Alexa 647" may be a fluorescent substance that absorbs light in a specific wavelength range and then emits light with a wavelength between about 650 nm and 750 nm. Here, an image for a biomolecule stained with the fluorescent substance "Alexa 647" may be acquired by filtering the light emitted from the fluorescent substance "Alexa 647" through a fourth emission filter and by photographing the light in a wavelength range 470 that the fourth emission filter passes. The wavelength range 470 in which the fourth emission filter passes the light may be, for example, greater than or equal to 660 nm and less than or equal to 740 nm.

The wavelength range of light absorbed by each fluorescent substance shown in the first graph 401 for excitation may differ. Also, the specific numerical range regarding the emission spectrum of each fluorescent substance described with reference to the first graph 401 is only an example for description and does not limit the present disclosure.

In an example embodiment, it is assumed that a plurality of biomolecules are contained in a sample, and fluorescent substances (i.e., fluorescent substances combined with biomolecules, respectively) for labeling the plurality of biomolecules, respectively, respond equally to light of a specific wavelength (e.g., greater than or equal to 350 nm and less than or equal to 400 nm). Here, to acquire an image for each of the plurality of biomolecules contained in the sample, typically, the emission spectra of fluorescent substances for labeling the plurality of biomolecules, respectively, need to be ensured that the emission spectra do not overlap at all or barely overlap each other. This is because, if spectra of light emitted from different fluorescent substances, respectively, overlap a lot, different biomolecules may be included in the same single image without being separated.

For example, in a second graph 403 regarding the emission spectrum of light emitted from the fluorescent substance of FIG. 4, it is assumed that the fluorescent substance "Alexa 546" emits light with a wavelength between about 550 nm and 650 nm, and the fluorescent substance "CF 594" emits light with a wavelength between about 575 nm and 700 nm. Under this assumption, the emission spectra of two fluorescent substances may commonly include a range of greater than or equal to 575 nm and less than or equal to 650 nm. In the case of capturing an image using the third emission filter to acquire an image for a biomolecule labeled with the fluorescent substance "Alexa 546," the captured image may contain at least a portion of the biomolecule labeled with the fluorescent substance "CF 594" since the wavelength range 450 in which the third emission filter passes the light is about greater than or equal to 565 nm and less than or equal to 590 nm. In detail, in the process in which a photographing device captures the image for the biomolecule labeled with the fluorescent substance "Alexa 546" by acquiring the light in the wavelength range 450 that the third emission filter passes in the light emitted from the fluorescent substance "Alexa 546," the photographing device may also acquire at least some of light signals emitted from the fluorescent substance "CF 594." As a result, the image for the biomolecule labeled with the fluorescent substance "Alexa 546" may at least partially include another biomolecule labeled with the fluorescent substance "CF 594." Reference numeral 451 of FIG. 4 indicates a signal of light of another fluorescent substance (e.g., "CF 594") acquired when the photographing device captures the image for the biomolecule labeled with the fluorescent substance "Alexa 546" using the third emission filter. Also, even in the case of capturing an image using a fifth emission filter that passes light with a wavelength of about 610 nm or more and 630 nm or less to acquire the image for the biomolecule labeled with the fluorescent substance "CF 594," the captured image may at least partially contain the biomolecule labeled with the fluorescent substance "Alexa 546." That is, in the process in which the photographing device captures the image for the biomolecule labeled with the fluorescent substance "CF 594" by acquiring the light in the wavelength range 490 that the fifth emission filter passes in the light emitted from the fluorescent substance "CF 594," at least some of light signals emitted from the fluorescent substance "Alexa 546" may be acquired. As a result, the image for the biomolecule labeled with the fluorescent substance "CF 594" may at least partially contain another biomolecule labeled with the fluorescent substance "Alexa 546." Reference numeral 491 of FIG. 4 indicates a signal of light of another fluorescent substance (e.g., "Alexa 546") acquired when the photographing device captures the image for the biomolecule labeled with the fluorescent substance "CF 594" using the fifth emission filter.

According to the conventional art described above, there was a limitation that emission spectra should not overlap as much as possible to observe a plurality of biomolecules contained in a sample and accordingly, there was a limitation that only up to 5 fluorescent substances may be simultaneously used. Also, to observe 10 or more biomolecules present in the sample using the limited number of fluorescent substances, a process of labeling biomolecules inside the sample with 3 to 5 fluorescent substances for imaging and then deactivating the fluorescent substances or removing the labeled fluorescent substances from the biomolecules and labeling other biomolecules inside the sample using the same fluorescent substances may be repeated. There was a limitation that chemical, optical, or physical treatment used in the process of deactivating or removing the fluorescent substances may distort the sample or may damage the biomolecules inside the sample.

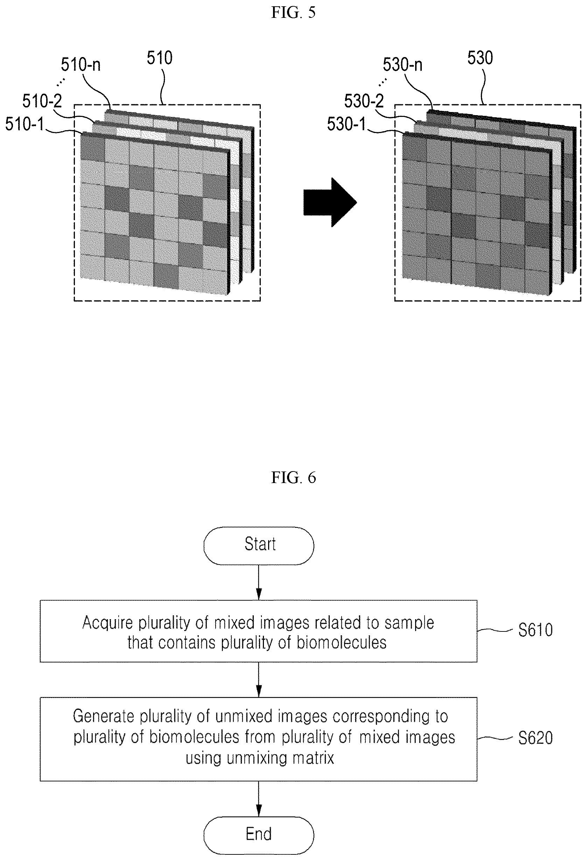

FIG. 5 conceptually illustrates a process of generating a plurality of unmixed images from a plurality of mixed images according to an example embodiment of the present disclosure.

An mixed image 510 according to the present disclosure may include one or two or more mixed images. In some example embodiments according to the present disclosure, when the mixed image 510 includes two or more mixed images, each mixed image may be separately referred to as a first mixed image 510-1, a second mixed image 510-2, ..., an $n^{th}$ mixed image 510-n (n is a natural number of 2 or more).

The mixed image 510 may be an image acquired by labeling a biomolecule contained in a sample with a fluorescent substance and then photographing the sample using the server 100. As described above, when staining the biomolecule contained in the biological sample with the fluorescent substance (i.e., physically or chemically binding the fluorescent substance to the biomolecule) and then irradiating light to the stained biological sample, the fluorescent substance contained in the biological sample is excited by absorbing light in a specific wavelength range and then emits the light in the specific wavelength range. Here, the mixed image 510 related to the biological sample may be acquired by photographing the light emitted from the fluorescent substance. The mixed image 510 is an image for which an image processing method according to the present disclosure is to be performed and may be distinguished from a "unmixed image 530" that is generated according to the image processing method of the present disclosure. That is, the mixed image 510 is an image for which the image processing method according to the present disclosure is not yet performed, and may be a target image to which the image processing method according to the present disclosure is to be applied.

The mixed image 510 may be an image displayed with another biomolecule different from a target biomolecule (e.g., at least one biomolecule labeled with at least one another fluorescent substance with similar emission spectrum, respectively, or a biomolecule stained in a previous staining round).

For example, the first mixed image 510-1 and the second mixed image 510-2 may be images acquired by staining different biomolecules "A1" and "A2" contained in the sample with different fluorescent substances "B1" and "B2," respectively, and by acquiring light emitted from the sample in each of different two wavelength ranges. As another example, the first mixed image 510-1 may be an image acquired by staining the biomolecule "A1" contained in the sample with the fluorescent substance "B1" and by photographing the light emitted from the fluorescent substance "B1," and the second mixed image 510-2 may be an image acquired by staining the biomolecule "A2" contained in the sample with the fluorescent substance "B2" and by photographing the light emitted from the fluorescent substance "B2," after acquiring the first mixed image 510-1. Here, "B1" and "B2" may be the same fluorescent substance and may also be different fluorescent substances. Although only two biomolecules are described above, it is only an assumption for clarity of description and does not limit the present disclosure. Herein, the terms "mixed image" and "input image" may be interchangeably used.

The unmixed image 530 according to the present disclosure may include one or two or more unmixed images. In some example embodiments according to the present disclosure, when the unmixed image 530 includes two or more unmixed images, each unmixed image may be separately referred to as a first unmixed image 530-1, a second unmixed image 530-2, ..., an $n^{th}$ unmixed image 530-n (n is a natural number of 2 or more).

The unmixed image 530 may be an image acquired by performing the image processing method of the present disclosure on the mixed image 510. The unmixed image 530 may be an image acquired as a result of performing at least some of operations of the image processing method according to the present disclosure on the unseparated 510. The unmixed image 530 may include all images acquired as a result of performing all operations of the image processing method according to the present disclosure. The unmixed image 530 may be an image that displays a target biomolecule. Herein, " unmixed image for a specific biomolecule" may refer to an image in which only the corresponding biomolecule is expressed or an image in which the corresponding specific biomolecule is expressed with higher brightness than other biomolecules. For example, a unmixed image for an "A" biomolecule may be an image that mainly expresses a shape, a size, a form, or a color of the "A" biomolecule contained in the sample. The unmixed image 530 may be generated to correspond to each biomolecule.

In various example embodiments of the present disclosure, each of the plurality of mixed images 510-1, 510-2, ..., 510-n or each of the plurality of unmixed images 530-1, 530-2, ..., 530-n may be a single-channel image having one channel. The single-channel image may represent an image having a single value (e.g., integer that is at least 0 and at most 255) for each pixel. A pixel value of each pixel of an mixed image corresponding to a single-channel image may be a value that indicates intensity of light emitted from a fluorescent substance when a photographing unit captures the mixed image by acquiring the light. The pixel value of each pixel of the unmixed image corresponding to the single-channel image may be a value that indicates intensity of light of each pixel to express an image for a specific biomolecule as a result of performing the image processing method according to the present disclosure. Also, herein, when the plurality of mixed images 510-1, 510-2, ..., 510-n or the plurality of unmixed images 530-1, 530-2, ..., 530-n are expressed to be included in a multi-channel image, each channel included in the multi-channel image may correspond to each of the plurality of mixed images 510-1, 510-2, ..., 510-n or the plurality of unmixed images 530-1, 530-2, ..., 530-n. For example, when the plurality of mixed images including three mixed images that are single-channel images is referred to as a "multi-channel mixed image," each channel included in the multi-channel mixed image may correspond to each of the mixed images included in the plurality of mixed images. Also, when displaying each of the plurality of mixed images or the plurality of unmixed images individually acquired according to the present disclosure as a multi-channel mixed image or a multi-channel unmixed image by allowing the same to correspond to a single channel, the plurality of mixed images or the plurality of unmixed images may be simultaneously displayed on a single multi-channel image. For example, when displaying three mixed images as an RGB image with three channels by allowing the three mixed images to channels red, green, and blue, respectively, the three mixed images may be simultaneously displayed on the RGB image.

The image processing method of the present disclosure may generate the unmixed image 530 from the mixed image 510.

In an example embodiment, the server 100 may generate the plurality of unmixed images 530-1, 530-2, ..., 530-n by performing a predetermined operation on the plurality of mixed images 510-1, 510-2, ..., 510-n. When it is assumed that the plurality of mixed images include two mixed images for description, two unmixed images generated as a result of performing a predetermined operation on the plurality of mixed images may be expressed as Equation 1 below.

[Equation 1]

$$X_1 = Y_1 + \theta_{12}Y_2$$

$$X_2 = \theta_{21}Y_1 + Y_2$$

In Equation 1, $Y_1$ and $Y_2$ represent mixed images, respectively, $\theta_{12}$ and $\theta_{21}$ denote specific coefficients used for an operation of generating unmixed images, respectively, and $X_1$ and $X_2$ represent the unmixed images, respectively. Here, $\theta_{12}$ and $\theta_{21}$ may be coefficients for determining weights (or contribution ratios) of the mixed images, respectively. The processor **110** may generate the unmixed images by performing a weighted sum (or linear superposition) on the mixed images based on at least one specific coefficient ($\theta_{12}$ or $\theta_{21}$). For example, according to Equation 1, the unmixed image $X_1$ may be generated as a result of linear superposition on 1 x $Y_1$ and $\theta_{12}$ x $Y_2$, and the unmixed image $X_2$ may be generated as a result of linear superposition on $\theta_{21}$ x $Y_1$ and 1 x $Y_2$.

Herein, the predetermined operation performed on the plurality of mixed images to generate the unmixed images may also be performed based on a matrix. This matrix may also be referred to as an "unmixing matrix" herein. The unmixing matrix may include at least one element that determines a linear superposition ratio between the plurality of mixed images. When expressing Equation 1 above based on the matrix, Equation 1 may be expressed as Equation 2 below.

[Equation 2]

$$\begin{bmatrix} X_1 \\ X_2 \end{bmatrix} = \begin{bmatrix} 1 & \theta_{12} \\ \theta_{21} & 1 \end{bmatrix} \begin{bmatrix} Y_1 \\ Y_2 \end{bmatrix}$$

In an example embodiment, the server 100 may generate the plurality of unmixed images 530-1, 530-2, ..., 530-n by subtracting a predetermined constant (or, constant offset) from each of the plurality of mixed images 510-1, 510-2, ..., 510-n and by performing a weighted sum on the plurality of mixed images each in which a value of each pixel is subtracted by the predetermined constant.

[Equation 3]

$$\begin{bmatrix} X_1 \\ X_2 \end{bmatrix} = \begin{bmatrix} 1 & \theta_{12} \\ \theta_{21} & 1 \end{bmatrix} \begin{bmatrix} Y_1 - \Theta_{b1} \\ Y_2 - \Theta_{b2} \end{bmatrix}$$

In Equation 3, $\Theta_{b1}$ and $\Theta_{b2}$ denote constant offsets corresponding to the mixed images $Y_1$ and $Y_2$, respectively. The server 100 may subtract the constant offset from each pixel value included in the mixed images and may generate each unmixed image based on a weighted sum result of ($Y_1 - \Theta_{b1}$) and ($Y_2 - \Theta_{b2}$).

In an example embodiment, each of $\Theta_{b1}$ and $\Theta_{b2}$ may be predetermined constant. In another example embodiment, $\Theta_{b1}$ and $\Theta_{b2}$ may be determined by applying a specific algorithm to $Y_1$ and $Y_2$.

Although Equations 1 to 3 above are described with the assumption that the plurality of mixed images include two mixed images, it does not limit the present disclosure and the plurality of mixed images may include three or more mixed images.

FIG. 6 is a flowchart illustrating an operation of the server 100 that generates a unmixed image for at least one biomolecule among a plurality of biomolecules using an unmixing matrix from a plurality of mixed images related to a sample according to an example embodiment of the present disclosure.

The server 100 may acquire a plurality of mixed images related to a sample that contains a plurality of biomolecules (S610). In detail, the processor 110 may acquire the plurality of mixed images based on a motion of a user of the server 100 that inputs the plurality of mixed images through the input unit 140. Also, the processor 110 may capture an image for the sample through a photographing unit (not shown) of the server 100 and may acquire the plurality of mixed images accordingly. Also, the processor 110 may acquire the plurality of mixed images from an external device or the user terminal 200 through the communication interface 120. The plurality of mixed images (input images) may be expressed as a matrix as shown in Equation 4 below.

[Equation 4]

$$Y = \begin{bmatrix} (First\ input\ img)_1 & \cdots & (First\ input\ img)_m \\ \vdots & \vdots & \vdots \\ (n^{th}\ input\ img)_1 & \cdots & (n^{th}\ input\ img)_m \end{bmatrix}$$

In Equation 4, Y represents a matrix for the plurality of mixed images (i.e., plurality of input images). The plurality of input images may be a plurality of mixed images acquired as a result of repeating a single round that includes a process of labeling a biomolecule contained in a sample and acquiring an mixed image n times (n is a natural number). In Equation 4, $(i^{th}\ input\ img)_j$ denotes a value of a $j^{th}$ pixel of an $i^{th}$ input image. In Equation 4, the number of rows of the matrix may be the same as the number of input images included in the plurality of input images. For example, if the number of the plurality of input images is n, the number of rows of the matrix (Y) may be n. In Equation 4, the number of columns of the matrix may be the same as the number of pixels included in each input image. For example, if the input image is a two-dimensional (2D) image and has a resolution 1024 (number of pixels in horizontal direction) x 1024 (number of pixels in vertical direction) and the number of pixels included in the input image is 1048576 (= 1024 * 1024), the number of columns of the matrix (Y) may be 1048576. That is, if the number of rows n and the number of columns is m in the matrix (Y), (i.e., in the case of n x m matrix), the matrix (Y) may be interpreted as a matrix related to n input images each including m pixels.

Then, the server 100 may generate a unmixed image for at least one biomolecule among the plurality of biomolecules from the plurality of mixed images using the unmixing matrix (S620). The unmixed image for at least one biomolecule may include the plurality of unmixed images for the plurality of biomolecules. The unmixing matrix according to the present disclosure refers to a square matrix and may be a square matrix in which the number of rows and the number of columns are the same or may be a rectangular matrix in which the number of rows and the number of columns are different. The unmixing matrix may be expressed as in, for example, Equation 5 below.

[Equation 5]

$$U = \begin{bmatrix} \alpha_{11} & \cdots & \alpha_{1n} \\ \vdots & \ddots & \vdots \\ \alpha_{k1} & \cdots & \alpha_{kn} \end{bmatrix}$$

In Equation 5, $\alpha_{ij}$ denotes a value of an element (or parameter) in an $i^{th}$ row and a $j^{th}$ column of the unmixing matrix. The number of rows in the unmixing matrix (U) may be the same as the number of mixed images that are targets of a matrix operation. For example, the number of rows of the unmixing matrix for n mixed images may be n that is the same as the number of mixed images. The number (i.e., k) of columns of the unmixing matrix (U) may be the same as or different from the number (n) of columns of the unmixing matrix (U). The number (i.e., k) of columns of the unmixing matrix (U) may be greater than or equal to the number (n) of rows of the unmixing matrix (U).

The processor 110 may generate at least one unmixed image by operating the plurality of mixed images using the unmixing matrix. For example, the plurality of unmixed images generated based on the mixed images according to Equation 4 above and the unmixing matrix according to Equation 5 above may be expressed as Equation 6 below.

[Equation 6]

$$X = U \cdot Y = \begin{bmatrix} (First\ unmixed\ img)_1 & \cdots & (First\ unmixed\ img)_m \\ \vdots & \vdots & \vdots \\ (n^{th}\ unmixed\ img)_1 & \cdots & (n^{th}\ unmixed\ img)_m \end{bmatrix}$$

In Equation 6, X represents a matrix acquired as a result of performing a matrix multiplication on the unmixing matrix ($U$) and the matrix ($Y$) for the plurality of mixed images. The number of rows of the matrix ($X$) for the plurality of unmixed images may be the same as the number of generated unmixed images. The number of columns of the matrix ($X$) for the plurality of unmixed images may be the same as the number of pixels included in each unmixed image. Each unmixed image may be an image for a corresponding specific biomolecule. In Equation 6, ($i^{th}$ *unmixed img*)$_j$ represents a value of a $j^{th}$ pixel of an $i^{th}$ unmixed image. For example, a first unmixed image may represent an image for a biomolecule "A" contained in the sample and an $n^{th}$ unmixed image may represent an image for a biomolecule "B" contained in the sample.

In an example embodiment, the unmixing matrix may be a square matrix in which the number of rows and the number of columns are the same. For example, the unmixing matrix that is the square matrix may be expressed as Equation 7 below.

[Equation 7]

$$ U = \begin{bmatrix} \alpha_{11} & \cdots & \alpha_{1n} \\ \vdots & \ddots & \vdots \\ \alpha_{n1} & \cdots & \alpha_{nn} \end{bmatrix} $$

In Equation 7, the unmixing matrix ($U$) may be a square matrix in which the number of rows and the number of columns are the same as n (n is a natural number of 1 or more). The processor 110 may acquire n unmixed images by performing a matrix operation on n mixed images based on the unmixing matrix ($U$).

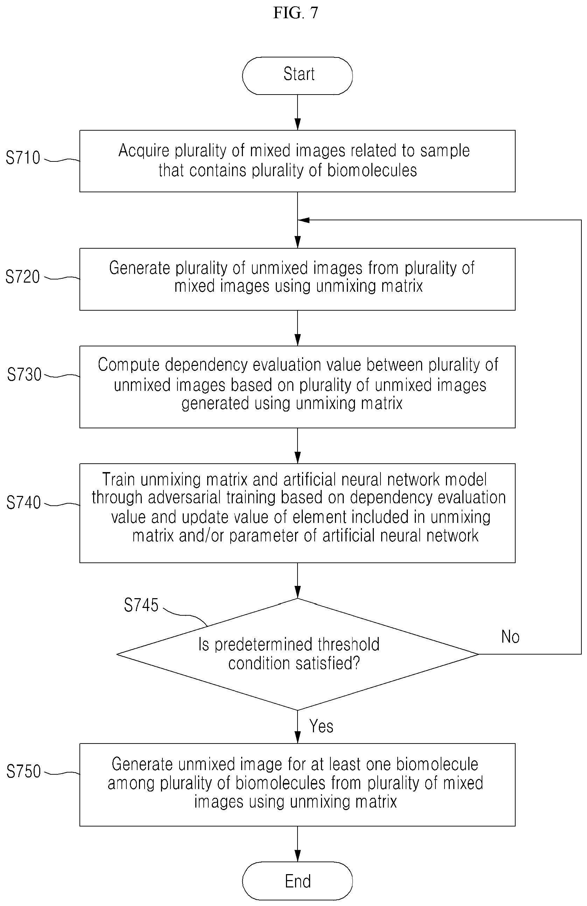

As described above, herein, the unmixing matrix refers to a matrix including at least one element that determines a linear superposition ratio between the plurality of mixed images and the processor 110 may generate a unmixed image for at least one biomolecule among the plurality of biomolecules by performing a matrix operation on the plurality of mixed images using the unmixing matrix. Various methods for determining the unmixing matrix as above are described with reference to FIG. 7 below.

Herein, the term "dependency" or "similarity" between the plurality of images refers to a term indicating how much information included in the plurality of images is related to each other and may be used in contrast to probabilistic independence. When the plurality of images are highly dependent on each other, pixels corresponding to the same location (coordinate value) in each image may have specific tendency between pixel values. For example, if a pixel value of a first image among pixel values corresponding to the same location in each image of the plurality of images is low, there is a high probability that a pixel value of a second image is low. Conversely, if the pixel value of the first image is high, there is a high probability that the pixel value of the second image is high. On the other hand, if the plurality of images have low dependency on each other, there may be no specific tendency between pixel values of corresponding pixels even though they are pixels correspond to the same location in the respective images. Herein, "there is no specific tendency" between a plurality of pixel values may indicate that the plurality of pixel values do not affect each other and size relationship regarding sizes of the plurality of pixel values is randomly determined. Also, herein, the term "independence" may be used as a term representing how independent information included in the plurality of images is from each other. That is, dependency and independence are opposite concepts and it may be expressed that the greater the dependency between the plurality of images, the smaller independence, and the smaller the dependency, the greater the independence. The plurality of mixed images according to the present disclosure may have high dependency between each other. Also, the plurality of unmixed images generated from the plurality of mixed images may have low dependency between each other.

FIG. 7 is a flowchart illustrating an operation of the server 100 that updates a value of an element included in an unmixing matrix and/or an artificial neural network model based on dependency evaluation results according to an example embodiment of the present disclosure.

The processor 110 may acquire a plurality of mixed images related to a sample that contains a plurality of biomolecules (S710). The processor 110 may generate a plurality of unmixed images from the plurality of mixed images using an unmixing matrix (S720).

The unmixing matrix as an initial matrix used when operation S720 is initially performed may be a random matrix. In another example embodiment, the initial matrix (i.e., unmixing matrix before initial update) may be an identity matrix. In still another example embodiment, the initial unmixing matrix before update may be a predetermined specific matrix. Operation S710 or S720 may be performed by the processor 110 in the same or similar manner as operation S610 or S620 described above in FIG. 6.

Then, the processor 110 may evaluate dependency between the plurality of unmixed images based on the plurality of unmixed images generated by the unmixing matrix. The dependency between the plurality of unmixed images may be evaluated based on a specific algorithm performed by the processor 110, or may be evaluated by performing, by the processor 110, a predetermined operation using the artificial neural network model. Also, the processor 110 may train the unmixing matrix and the artificial neural network model through adversarial training based on dependency evaluation results.

According to various example embodiments of the present disclosure, the processor 110 may compute a value indicating the dependency between the plurality of unmixed images according to a predetermined algorithm (or equation) (hereinafter, also referred to as "dependency evaluation value").

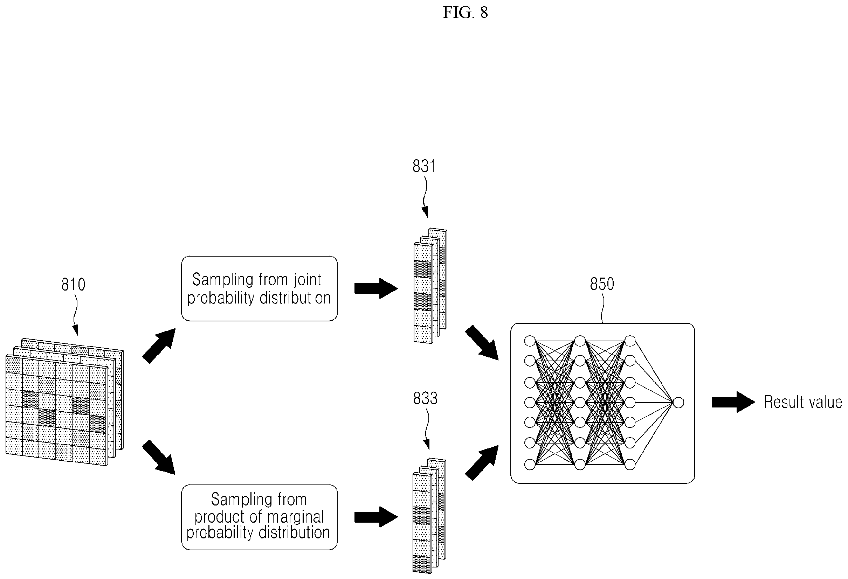

According to various example embodiments of the present disclosure, the processor 110 may compute a dependency evaluation value between the plurality of unmixed images based on the artificial neural network model (S730). The dependency evaluation value between the plurality of unmixed images may be evaluated based on the specific algorithm performed by the processor 110, or may be evaluated by performing, by the processor 110, a predetermined operation using the artificial neural network model. Also, the processor 110 may train the unmixing matrix and the artificial neural network model through adversarial training based on the dependency evaluation value (S740). A specific example embodiment in which the unmixing matrix and the artificial neural network model are trained through adversarial training is described below in detail with reference to FIGS. 8 to 12.

Referring again to FIG. 7, after performing operation S740, the processor 110 may determine whether a predetermined threshold condition is satisfied (S745).

In an example embodiment, the predetermined threshold condition may be a condition that follows the number of updates of the unmixing matrix. For example, it is assumed that the predetermined threshold condition is a condition satisfied when the unmixing matrix is modified N times (N is a natural number of 1 or more). Here, the processor 110 may count the number of updates each time the unmixing matrix is updated and may determine that the predetermined threshold condition is satisfied when the counted number of updates is N times.

In an example embodiment in which the processor 110 computes a dependency evaluation value between the plurality of unmixed images, the predetermined threshold condition may be a condition that follows a size of the computed dependency evaluation value. For example, it is assumed that the predetermined threshold is a condition satisfied when the size of the dependency evaluation value computed between the plurality of unmixed images is 0.2 or less. Here, if the size of the dependency evaluation value computed between the plurality of unmixed images as a result of performing operation S730 is 0.2 or less, the processor 110 may determine that the predetermined threshold condition is satisfied.

Also, in an example embodiment in which the processor 110 computes a dependency evaluation value based on the artificial neural network model, the predetermined threshold condition may be a condition based on at least one of the number of training times of the artificial neural network model, a size of an output value, and a loss value (error between output value and true value). For example, it is assumed that the predetermined threshold condition is a condition satisfied when a loss value of the artificial neural network model is 0.1 or less. Here, the processor 110 may determine that the predetermined threshold condition is satisfied when the loss value of the artificial neural network model is 0.1 or less.

When the corresponding condition is not satisfied as a result of determining, by the processor 110, whether the predetermined threshold condition is satisfied, the processor 110 may repeat operations S720 to S740 until the predetermined threshold condition is satisfied.

When the corresponding condition is satisfied as a result of determining, by the processor 110, whether the predetermined threshold condition is satisfied, the processor 110 may terminate updating of the unmixing matrix and may generate a unmixed image for at least one biomolecule among the plurality of biomolecules (S750). The updated unmixing matrix may be a matrix in which a value of at least one element is modified compared to the unmixing matrix before updating.

The processor 110 may generate the unmixed image for at least one biomolecule among the plurality of biomolecules from the plurality of mixed images using a final unmixing matrix (S750).

As described above with reference to FIG. 7, the server 100 of the present disclosure may determine the unmixing matrix for generating the unmixed image for at least one biomolecule from the plurality of mixed images through various methods. Hereinafter, an artificial neural network model according to the present disclosure is further described with reference to FIG. 8.

The artificial neural network model according to the present disclosure may be trained using two or more data sets that are generated based on the plurality of unmixed images generated using the unmixing matrix. A first data set included in the two or more data sets may include at least one piece of data that includes values of pixels corresponding to the same location in each of the plurality of unmixed images. Also, a second data set included in the two or more data sets may include at least one piece of data that includes values of pixels corresponding to a random location from each of the plurality of unmixed images. For description, the plurality of unmixed images generated using the unmixing matrix may be assumed to include two unmixed images (i.e., two single-channel images). Here, the plurality of unmixed images may be expressed as Equation 8 below.

[Equation 8]

$$\begin{bmatrix} x_{11} & x_{12} & \dots & x_{1N} \\ x_{21} & x_{22} & \dots & x_{2N} \end{bmatrix}$$

In Equation 8, elements $(x_{11}, x_{12}, ..., x_{1N})$ included in a first row of the matrix may be the result of arranging values of pixels included in a first unmixed image of the two unmixed images. Here, a predetermined order determination method may be a method of sequentially arranging a plurality of pixels present on the 2D plane. Also, elements $(x_{21}, x_{22}, ..., x_{2N})$ included in a second row of the matrix may be the result of arranging values of pixels included in a second unmixed image of the two unmixed images. The first data set generated for the plurality of unmixed images expressed by Equation 8 may be a set that includes data, such as $(x_{11}, x_{21}), (x_{12}, x_{22}), ..., (x_{1N}, x_{2N})$. That is, the first data set may include at least one piece of data that includes values of pixels corresponding to the same location in each of the plurality of unmixed images as elements of an ordered pair. Also, the second data set generated for the plurality of unmixed images expressed by Equation 8 may be a set that includes data, such as $(x_{11}, x_{22}), (x_{12}, x_{21}), ..., (x_{1N}, x_{21})$. That is, the second data set may include at least one piece of data that includes values of pixels extracted at a random location from each of the plurality of unmixed images as elements of an ordered pair. Therefore, the ordered pair of data included in the second data set may have values of pixels corresponding to the same location and may also have values of pixels at different locations, among the plurality of unmixed images. The artificial neural network model according to the present disclosure may be trained to distinguish the two or more data sets from each other.

FIG. 8 conceptually illustrates a process of computing a dependency evaluation value between a plurality of unmixed images 810 based on an artificial neural network model 850 according to an example embodiment of the present disclosure. Although description is made in FIG. 8 with the assumption that the plurality of unmixed images 810 include three unmixed images for clarity of description, the present disclosure is not limited thereto. The artificial neural network model 850 may be an artificial neural network model (hereinafter, also referred to as "classification model") configured to receive specific data generated from the plurality of unmixed images as input, and to generate a classification value of classifying the input specific data into one data set of two or more data sets.

The processor 110 may generate at least one piece of input data input to the artificial neural network model 850 based on the plurality of unmixed images 810 generated using an unmixing matrix. The processor 110 may generate data included in a first data set 831 or data included in a second data set 833 from the plurality of unmixed images 810 as input data.

In an example embodiment, the first data set 831 generated from the plurality of unmixed images 810 may be expressed as Equation 9 below.

[Equation 9]

$$\boldsymbol{x} = \{(x_{1i}, x_{2i}, x_{3i})\}_{i=1}^{n} \sim (P_{X_1 X_2 X_3}(x_1, x_2, x_3))^n$$

In Equation 9, $\boldsymbol{x}$ on the left side represents the first data set. $(x_{1i}, x_{2i}, x_3 i)$ on the right side represents $i^{th}$ input data (i is a natural number that is no less than 1 and no greater than n) included in the first data set, $x_{1i}$ denotes a pixel value extracted from a first unmixed image among the plurality of unmixed images 810, $x_{2i}$ denotes a pixel value extracted from a second unmixed image among the plurality of unmixed images 810, and $x_{3i}$ denotes a pixel value extracted from a third unmixed image among the plurality of unmixed images 810. That is, since the first data set is a set that includes at least one piece of data having a pixel value at the same location included in each of the plurality of unmixed images 810, each pixel value included in $(x_{1i}, x_{2i}, x_{3i})$ may be a value determined from pixels at the same location corresponding to each other in the plurality of unmixed images. Meanwhile, $P_{X_1 X_2 X_3}(x_1, x_2, x_3)$ on the right side represents first probability distribution corresponding to joint probability distribution for the plurality of unmixed images 810 and expresses mathematical meaning of the generated first data set as an example.

In an example embodiment, the second data set 833 generated from the plurality of unmixed images 810 may be expressed as Equation 10 below.

[Equation 10]

$$\boldsymbol{x}' = \{(x_{1i}', x_{2i}', x_{3i}')\}_{i=1}^{n} \sim (P_{X_1}(x_1) P_{X_2}(x_2) P_{X_3}(x_3))^n$$

In Equation 10, $\boldsymbol{x}'$ on the left side represents the second data set. $(x_{1i}', x_{2i}', x_{3i}')$ on the right side represents $i^{th}$ input data included in the second data set (i is a natural number that is no less than 1 and no greater than n), $x_{1i}'$ denotes a pixel value extracted from the first unmixed image among the plurality of unmixed images 810, $x_{2i}'$ denotes a pixel value extracted from the second unmixed image among the plurality of unmixed images 810, and $x_{3i}'$ denotes a pixel value extracted from the third unmixed image among the plurality of unmixed images 810. That is, since the second data set is a set that includes at least one piece of data having a pixel value at a random location (coordinates) included in each of the plurality of unmixed images 810, each pixel value included in $(x_{1i}', x_{2i}', x_{3i}')$ may be a pixel value extracted at a random location (coordinates) from each of the plurality of unmixed images. Meanwhile, $P_{X_1}(x_1)P_{X_2}(x_2)P_{X_3}(x_3)$ on the right side represents second probability distribution corresponding to marginal probability distribution for the plurality of unmixed images 810 and expresses mathematical meaning of the generated second data set as an example.

The processor 110 may input the input data to the artificial neural network model 850 and may acquire a classification value generated by the artificial neural network model 850. In detail, if the input data is data included in a single data set of the first data set 831 and the second data set 833, the classification value output from the artificial neural network model 850 may be a value for specifying the data set that includes the input data. That is, if the input data is data included in the first data set 831, the classification value generated by the artificial neural network model 850 may be information that indicates the first data set 831. Also, if the input data is data included in the second data set 833, the classification value generated by the artificial neural network model 850 may be information that indicates the second data set 833.

The processor 110 may compute a dependency evaluation value of the artificial neural network model 850 based on the classification value. The dependency evaluation value computed by the processor 110 may be metrics for evaluating distinguishing capability of the artificial neural network model 850 for the input data. For example, the dependency evaluation value may be a loss value of a loss function (e.g., cross-entropy function or mean squared error function) used by the artificial neural network model 850. Also, for example, the dependency evaluation value may be distinguishing capability between first input data and second input data of the artificial neural network model 850.

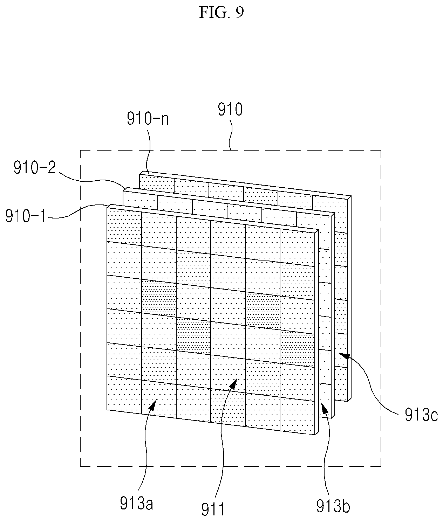

FIG. 9 conceptually illustrates a plurality of unmixed images generated from an unmixing matrix according to an example embodiment of the present disclosure. Each unmixed image included in a plurality of unmixed images 910 may be referred to as a first unmixed image 910-1, a second unmixed image 910-2, a third unmixed image 910-3, ..., an $n^{th}$ unmixed image 910-n, if necessary for description. Reference numerals 911, 913a, 913b, and 913c indicate locations of specific pixels included in the respective unmixed images. The aforementioned description related to the plurality of unmixed images is only an assumption for clarity of description and does not limit the present disclosure.

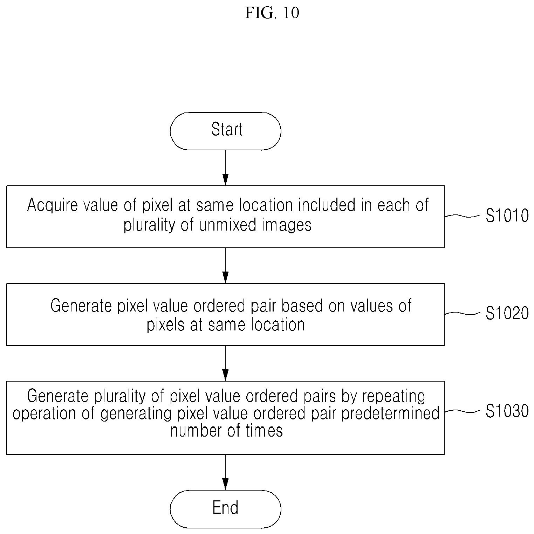

Hereinafter, a process in which the processor 110 generates the first data set 831 is described with reference to FIG. 10. FIG. 10 is a flowchart illustrating an operation of a server that generates a pixel value ordered pair at the same location based on values of pixels at the same location included in each of a plurality of unmixed images according to an example embodiment of the present disclosure. The first data set 831 may be a plurality of channel ordered pairs that are generated based on pixel values at the same location in the plurality of unmixed images.

The processor 110 may acquire a value of a pixel at the same location included in each of the plurality of unmixed images (S1010). For example, the processor 110 may acquire a pixel value (e.g., 0.9) from a first location 911 within the first unmixed image 910-1 included in the plurality of unmixed images 910. Also, the processor 110 may acquire a pixel value (e.g., 0.8) from a location (e.g., same coordinates) corresponding to the first location 911 within the second unmixed image 910-2. Also, the processor 110 may acquire a pixel value (e.g., 0.2) from a location (e.g., same coordinates) corresponding to the first location 911 within the third unmixed image 910-3. As described above, the processor 110 may acquire a pixel value of a pixel at the same location (i.e., first location) from each unmixed image included in the plurality of unmixed images 910.

Then, the processor 110 may generate a pixel value ordered pair based on pixel values at the same location acquired from the plurality of unmixed images, respectively (S1020). The pixel value ordered pair may include a plurality of elements. For example, the pixel value ordered pair for the plurality of unmixed images 910 may include three elements. The pixel value ordered pair for the plurality of unmixed images 910 may be expressed as, for example, (v1, v2, v3). Here, a first element (v1) included in the pixel value ordered pair (v1, v2, v3) may be a pixel value included in the first unmixed image 910-1, a second element (i.e., v2) may be a pixel value included in the second unmixed image 910-2, and a third element (i.e., v3) may be a pixel value included in the third unmixed image 910-3. A value of each element included in the pixel value ordered pair is a value indicating intensity of light and may be a real number included in a predetermined range (e.g., no less than 0 and no greater than 1). If a pixel value acquired from the first location 911 of the first unmixed image 910-1 is 0.9, a pixel value acquired from the first location 911 of the second unmixed image 910-2 is 0.8, and a pixel value acquired from the first location 911 of the third unmixed image 910-3 is 0.2, the processor 110 may generate a pixel value ordered pair with values of (0.9, 0.8, 0.2).

Then, the processor 110 may generate a plurality of pixel value ordered pairs by repeating an operation of generating the pixel value ordered pair a predetermined number of times (S1030). For example, the processor 110 may generate the number of pixel value ordered pairs equal to the number of repetitions by sequentially repeating operations S1010 and S1020 a predetermined number of times.

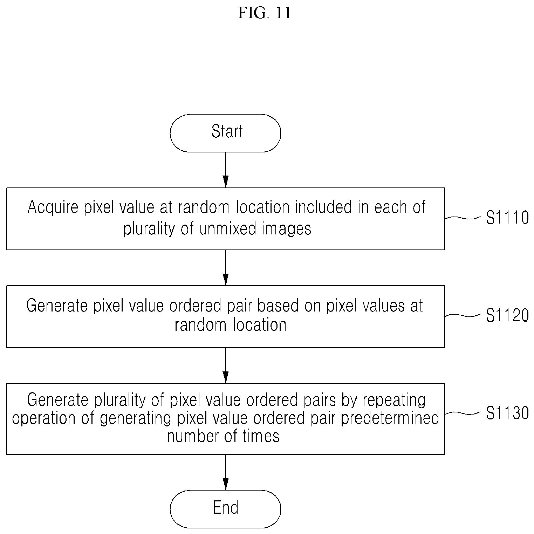

Hereinafter, a process in which the processor generates the second data set 833 is described with reference to FIG. 11. FIG. 11 is a flowchart illustrating an operation of a server that generates a pixel value ordered pair based on values of pixels corresponding to a random location (coordinates) from each of a plurality of unmixed images according to an example embodiment of the present disclosure. The second data set 833 may be a plurality of pixel value ordered pairs that are generated based on pixel values at the random location from each of the plurality of unmixed images. The processor 110 may acquire pixel values at different locations included in the plurality of images (S1110). For example, the processor 110 may acquire a pixel value (e.g., 0.5) from the (2-1)-th location 913a within the first unmixed image 910-1 among the plurality of unmixed images. Also, the processor 110 may acquire a pixel value (e.g., 0.1) from the (2-2)-th location 913b within the second unmixed image 910-2. Also, the processor 110 may acquire a pixel value (e.g., 0.4) from the (2-3)-th 913c within the third unmixed image 910-3. The (2-1)-th location 913a, the (2-2)-th location 913b, and the (2-3)-th location 913c may be locations of randomly determined coordinate values. As described above, the processor 110 may acquire a pixel value of a pixel at a random location from each of the plurality of unmixed images included in the plurality of unmixed images 910.

Then, the processor 110 may generate the pixel value ordered pair based on pixel values acquired from random locations of the plurality of unmixed images. For example, if a pixel value acquired from the (2-1)-th location 913a within the first unmixed image 910-1 is 0.5, a pixel value acquired from the (2-2)-th location 913b within the second unmixed image 910-2 is 0.1, and a pixel value acquired from the (2-3)-th location 913c within the third unmixed image 910-3 is 0.4, the processor 110 may generate the pixel value ordered pair with values of (0.5, 0.1, 0.4).

Then, the processor 110 may generate a plurality of pixel value ordered pairs by repeating a process (i.e., S1110 and S1120) of generating the pixel value ordered pair a predetermined number of times (S1130).

To train the artificial neural network model 850 as a classification model according to an example embodiment of the present disclosure, the processor 110 may generate learning data by differently labeling data included in the first data set 831 and data included in the second data set 833. For example, the processor 110 may label the data of the first data set 831 with "1" and may label the data of the second data set 833 with "0." When the classification model is trained based on the learning data generated as above, the processor 110 may train the classification model by inputting input data included in the learning data to the classification model, by acquiring output data (e.g., real number between 0 and 1) output from the classification model, and by updating a value of at least one parameter included in the classification model through a backpropagation technique based on a difference between a value labeled for the corresponding input data and the output data of the classification model.

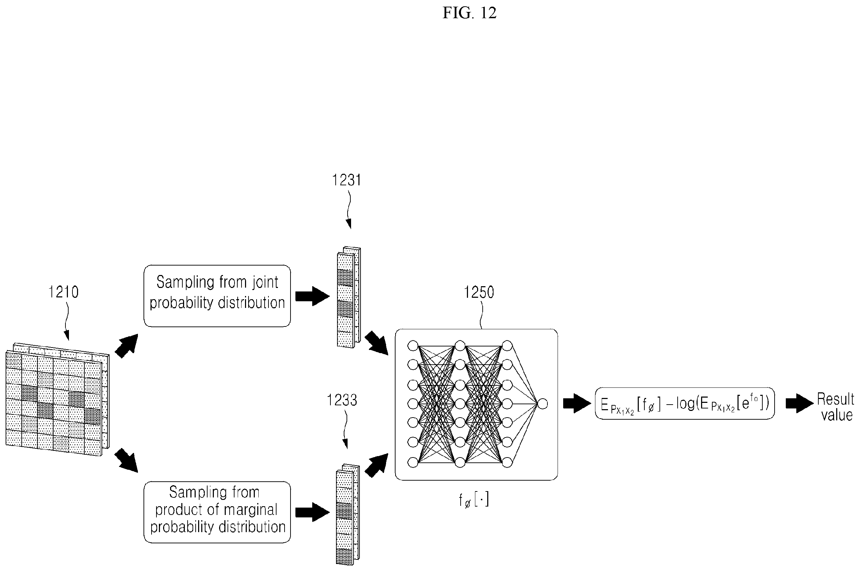

FIG. 12 conceptually illustrates a process of evaluating dependency between a plurality of unmixed images 1210 based on an artificial neural network model 1250 according to another example embodiment of the present disclosure. Hereinafter, although description is made with reference to FIG. 12 with the assumption that the plurality of unmixed images 1210 include two unmixed images for clarity of description, the present disclosure is not limited thereto. The artificial neural network model 1250 may be an artificial neural network model (hereinafter, also referred to as "prediction model" or "classification model") configured to receive a plurality of input data and to generate a dependency evaluation value for the plurality of unmixed images based on the plurality of input data

The processor 110 may generate the plurality of input data input to the artificial neural network model 1250 based on the plurality of unmixed images 1210 generated using an unmixing matrix. The processor 110 may generate first input data and second input data from the plurality of unmixed images 1210. The first input data may be data included in a first data set 1231. The second input data may be data included in a second data set 1233. Hereinafter, although description is made with the assumption that the artificial neural network model 1250 receives two pieces of input data as the plurality of input data, this does not limit the present disclosure and the artificial neural network model 1250 of the present disclosure may receive three or more pieces of input data as input.

The processor 110 may input the first input data and the second input data to the artificial neural network model 1250, and may acquire a dependency evaluation value generated by the artificial neural network model 1250. The dependency evaluation value generated by the artificial neural network model 1250 as the prediction model may be a value indicating a level of difference between the plurality of input data. That is, the dependency evaluation value generated by the artificial neural network model 1250 may be a value indicating how much the plurality of input data differs from each other. The dependency evaluation value generated by the artificial neural network model 1250 according to the present disclosure may be metrics for evaluating distinguishing capability of the artificial neural network model 1250 for the input data. For example, the dependency evaluation value may be a loss value of a loss function used by the artificial neural network model 1250. The artificial neural network model 1250 may be trained based on a specific loss function (e.g., cross-entropy function or mean squared error function) to improve the distinguishing capability between the first input data and the second input data. The processor 110 may use a loss value of a specific loss function used by the artificial neural network model 1250 as the dependency evaluation value generated by the artificial neural network model 1250. Also, for example, the dependency evaluation value may be the distinguishing capability between the first input data and the second input data. In the following, for clarity of description, "mutual information amount" is used as an example of the dependency evaluation value computed based on the artificial neural network model. Here, the mutual information amount may be expressed as Equation 11.

[Equation 11]

$$I(\boldsymbol{x}; \boldsymbol{x}') = \sup_{\phi} \mathbb{E}_{P_{X_1 X_2}}\left[f_{\phi}\right] - \log\left(\mathbb{E}_{P_{X_1} P_{X_2}}\left[e^{f_{\phi}}\right]\right)$$

In Equation 11, $I(\boldsymbol{x};\boldsymbol{x}')$ on the left side represents the mutual information amount for two unmixed images (i.e., $X_1$ and $X_2$) computed based on the first input data and the second input data (i.e., $\boldsymbol{x}$ and $\boldsymbol{x}'$) input to the artificial neural network model 1250. In $f_{\phi}$ on the right side, $\phi$ represents at least one parameter included in the artificial neural network model 1250, and $f_{\phi}$ refers to output data of the artificial neural network model 1250 and represents a specific value related to the two pieces of input data. Also, $P_{X_1 X_2}$ of $\mathbb{E}_{P_{X_1 X_2}}\left[f_{\phi}\right]$ represents the joint probability distribution for the plurality of unmixed images 1210, and $\mathbb{E}_{P_{X_1 X_2}}\left[f_{\phi}\right]$ represents an expectation value for a specific value ($f_{\phi}$) generated by the artificial neural network model 1250 for the two pieces of input data ($\boldsymbol{x}$ and $\boldsymbol{x}'$) in the joint probability distribution for the plurality of unmixed images 1210. Meanwhile, $P_{X_1} P_{X_2}$ of $\mathbb{E}_{P_{X_1} P_{X_2}}\left[e^{f_{\phi}}\right]$ represents product of the marginal probability distribution for each of the plurality of unmixed images 1210. $\sup_{\phi}(\cdot)$ denotes an upper limit of a term in parentheses according to a change in the value of $\phi$. As shown in Equation 11, the processor 110 may compute the mutual information amount for the plurality of unmixed images based on the specific value ($f_{\phi}$) generated by the artificial neural network model 1250. For example, the more similar the first input data and the second input data ($\boldsymbol{x}$ and $\boldsymbol{x}'$) are to each other, the larger the mutual information amount ($I(\boldsymbol{x};\boldsymbol{x}')$) between the two pieces of input data may have. Also, as the mutual information amount increases, the two unmixed images may be interpreted as more dependent images.

To train the artificial neural network model 1250 as the prediction model as described above, the processor 110 may compute the mutual information amount based on a specific value output from the artificial neural network model 1250 and may train the prediction model to maximize the computed mutual information amount. That is, a value of at least one parameter included in the artificial neural network model 1250 may be updated to predict a specific value in the direction of maximizing the mutual information amount for the plurality of unmixed images. For example, the processor 110 may apply a gradient descent (or gradient ascent) to a predetermined mutual information amount computation formula such that the value of at least one parameter included in the artificial neural network model 1250 may be updated according to the chain rule.

The unmixing matrix and the artificial neural network model of the present disclosure may be trained through adversarial training. Herein, expression that two objects are "trained through adversarial training" may indicate that a value of at least one parameter (or element) included in each object varies by training the two objects to solve conflicting tasks. For example, a parameter of the unmixing matrix is expressed as "$\theta$," a parameter of the artificial neural network model is expressed as "$\phi$," and it is assumed that a binary cross-entropy (BCE) loss function is used as a loss function computed for output of the artificial neural network model. Here, a process of updating a parameter of each of the unmixing matrix and the artificial neural network model that are trained through adversarial training may be expressed as Equation 12 below.

[Equation 12]

$$\theta \leftarrow \theta + \eta_{\theta} \nabla_{\theta} \mathcal{L}_{BCE}$$

$$\phi \leftarrow \phi - \eta_{\phi} \nabla_{\phi} \mathcal{L}_{BCE}$$

In Equation 12, $\eta_{\theta}$ denotes a learning rate for a parameter of the unmixing matrix, and $\nabla_{\theta}$ denotes a gradient operation computed for each parameter of the unmixing matrix. Also, $\eta_{\phi}$ denotes a learning rate for a parameter of the artificial neural network model, and $\nabla_{\phi}$ denotes a gradient operation computed for each parameter of the artificial neural network model. $\mathcal{L}_{BCE}$ denotes a loss value of a BCE loss function. The unmixing matrix and the artificial neural network model may be trained through adversarial training by updating parameter values in opposite directions (i.e., positive (+) and negative (-)) in proportion to a size of the computed loss function value (e.g., BCE loss value). That is, each parameter value may be updated such that the unmixing matrix may minimize the loss function value and the artificial neural network model may maximize the loss function value, or each parameter value may be updated such that the unmixing matrix may maximize the loss function value and the artificial neural network model may minimize the loss function value.

In an example embodiment regarding adversarial training according to the present disclosure, in the case of training the artificial neural network model 850 as the classification model through adversarial training, all of the unmixing matrix and the artificial neural network model 850 may be trained through adversarial training based on accuracy of a classification value generated by the artificial neural network model 850. In detail, a value of at least one element included in the unmixing matrix may be updated such that the accuracy of the classification value generated by the artificial neural network model 850 may decrease, and a value of at least one parameter included in the artificial neural network model 850 may be updated such that the accuracy of the classification value generated by the artificial neural network model 850 may increase. That is, the unmixing matrix may be updated such that the artificial neural network model 850 may not distinguish between data of the first data set 831 and data of the second data set 833, and the artificial neural network model 850 may be updated to better distinguish between two types of data sets (i.e., first data set and second data set).

In an example embodiment, when data input to the artificial neural network model 850 as the classification model is well classified into the first data set or the second data set, the processor 110 may determine that training of the unmixing matrix and the artificial neural network model 850 is insufficient and training of the artificial neural network model 850 may be additionally performed. Also, in this case, the plurality of unmixed images generated from the plurality of mixed images using the unmixing matrix may be determined to be dependent on each other. Conversely, when data input to the artificial neural network model 850 as the classification model is not well classified into the first data set 831 or the second data set 833, the processor 110 may determine that training of the unmixing matrix and the artificial neural network model 850 is sufficient and may suspend training of the artificial neural network model 850. Also, in this case, the plurality of unmixed images generated from the plurality of mixed images using the unmixing matrix may be determined to be independent from each other.

In the present disclosure, determination that data input to the artificial neural network model 850 as the classification model is "well classified" or "not well classified" may be quantitatively or numerically determined. For example, when the classification model generates the classification value to determine a data set to which input data belongs, the processor 110 may evaluate accuracy (or reliability) or a loss function value of the classification model using a test data set in which a true value is labeled to a predetermined number of input data. Here, a cross-entropy function or a mean squared error function may be used as a loss function. In detail, the processor 110 may determine that training of the classification model is sufficient when a true value and a classification value within an error range are output for a specific number of input data or a specific ratio or more of input data among input data included in the test data set. Alternatively, the processor 110 may determine that training of the classification model is sufficient when a change in the accuracy of the classification model is less than or equal to a threshold as training of the classification model progresses. The aforementioned accuracy evaluation method of the classification model is only an example for explanation and does not limit the present disclosure.

In another example embodiment regarding adversarial training according to the present disclosure, in the case of training the artificial neural network model 1250 as the prediction model through adversarial training, a value of at least one element included in the unmixing matrix may be updated such that a dependency evaluation value generated by the artificial neural network model 1250 may decrease, and a value of at least one parameter included in the artificial neural network model 1250 may be updated such that a dependency evaluation value (e.g., distinguishing capability between first input data and second input data, mutual information amount, Kullback-Leibler divergence value, cross-entropy value, rand index, etc.) for the plurality of unmixed images may increase. That is, the artificial neural network model 1250 may be trained in the direction of maximizing the dependency evaluation value for the plurality of unmixed images, and the unmixing matrix may be trained in the direction of minimizing the dependency evaluation value for the plurality of unmixed images. In this manner, the artificial neural network model 1250 and the unmixing matrix may be trained through adversarial training.

In an example embodiment, if a dependency evaluation value computed based on a specific value output from the artificial neural network model 1250 as the prediction model does not exceed a predetermined threshold, the processor 110 may determine that training of the artificial neural network model 1250 is insufficient and may additionally perform training of the unmixing matrix and the artificial neural network model 1250. Also, in this case, the plurality of unmixed images generated from the plurality of mixed images using the unmixing matrix may be determined to be dependent on each other. On the contrary, if the dependency evaluation value computed based on the specific value output from the artificial neural network model 1250 as the prediction model exceeds a predetermined threshold, the processor 110 may determine that training of the artificial neural network model 1250 is sufficient and may suspend training of the unmixing matrix and the artificial neural network model 1250. Also, in this case, the plurality of unmixed images generated from the plurality of mixed images using the unmixing matrix may be determined to be independent from each other. Meanwhile, the processor 110 may determine a learning level of the prediction model based on the number of times the prediction model is trained, for example, the number of training epochs.

According to some example embodiments of the present disclosure as described above, the processor 110 may evaluate dependency for a plurality of unmixed images, and may determine a parameter of the unmixing matrix based on evaluation results. Based on the unmixing matrix determined as above, the processor 110 according to the present disclosure may generate a unmixed image for each biomolecule contained in a sample from a plurality of mixed images captured from the sample.

In an additional example embodiment of the present disclosure, the unmixing matrix may be trained with the artificial neural network model through adversarial training and may be trained such that each pixel value of a unmixed image may not be negative. In detail, the unmixing matrix trained with the artificial neural network model through adversarial training may be trained by additionally using a loss function for non-negativity constraint in addition to a loss function used for adversarial training. In the example embodiment, the loss function used for adversarial training is assumed as a binary cross-entropy loss function. The "loss function for non-negativity constraint (Negativity loss, $\mathcal{L}_N$)" is a loss function designed to limit a pixel value of a unmixed image from being negative and, for example, may be a function that computes a loss function proportional to an absolute value of the pixel value if the pixel value of the unmixed image is negative and computes zero if the pixel value is positive. A process of updating a parameter of each of the unmixing matrix and the artificial neural network model may be expressed as Equation 13 below.

[Equation 13]

$$\theta \leftarrow \theta - \eta_\theta \nabla_\theta(-\mathcal{L}_{BCE} + \lambda\mathcal{L}_N)$$

$$\phi \leftarrow \phi - \eta_\phi \nabla_\phi \mathcal{L}_{BCE}$$

$\theta$ denotes a parameter of the unmixing matrix, $\eta_\theta$ denotes a learning rate for the parameter of the unmixing matrix, and $\nabla_\theta$ denotes a gradient operation computed for each parameter of the unmixing matrix. Also, $\phi$ denotes a parameter of the artificial neural network model, $\eta_\phi$ denotes a learning rate for the parameter of the artificial neural network model, and $\nabla_\phi$ denotes a gradient operation computed for each parameter of the artificial neural network model. $\mathcal{L}_{BCE}$ denotes a loss function of the binary cross-entropy loss function, and $\mathcal{L}_N$ denotes a loss value of the loss function for non-negativity constraint. $\lambda$ denotes a coefficient that determines a reflection ratio for learning of $\mathcal{L}_N$. The artificial neural network model trained according to Equation 13 is trained in the direction of minimizing the loss value of the binary cross-entropy loss function and the unmixing matrix is trained in the direction of maximizing the loss value of the binary cross-entropy loss function and, here, at the same time, trained in the direction of minimizing the loss value of the non-negativity constraint loss function. The unmixing matrix trained by additionally using the non-negativity constraint loss function is trained by preventing a value of the unmixed image from being negative and has the advantage of being able to more efficiently determine a parameter for accurately unmixing the plurality of mixed images and also having a fast learning convergence speed.

In an additional example embodiment of the present disclosure, the processor 110 may perform pixel binning processing on a unmixed image and/or an mixed image. Pixel binning may refer to an image processing process that combines adjacent pixels in an image and converts the same into a single pixel. For example, in the case of performing 2x2 pixel binning on an image with a size of 8x8, an image with a size of 4x4 may be generated as a result of combining adjacent 2x2 pixels to derive a single pixel. That is, in the case of performing nxn pixel binning processing on a specific image, the number of pixels included in the image is reduced to $\frac{1}{n^2}$, and a resolution of each of horizontal axis and vertical axis is reduced to $\frac{1}{n}$. The image on which pixel binning processing is performed as above may have a lowered resolution, but instead generate a single pixel by combining adjacent pixels and thus, may have a higher signal to noise ratio (SNR). For example, the processor 110 may perform pixel binning processing on a unmixed image generated in the process of training the unmixing matrix using the artificial neural network model. Referring again to FIG. 8, the processor 110 may initially perform pixel binning processing on the plurality of unmixed images 810 before generating at least one piece of input data that is input to the artificial neural network model 850 based on the plurality of unmixed images 810 generated by the unmixing matrix and then, may generate at least one piece of input data that is input to the artificial neural network model 850 based on the plurality of unmixed images on which pixel binning processing is performed. Also, a loss value of the non-negativity constraint loss function according to an example embodiment described above with reference to Equation 13 may be computed for the unmixed image on which pixel binning processing is performed. As such, pixel binning processing according to the present disclosure may improve training performance of the artificial neural network model by increasing an SNR of an image input to the artificial neural network model. Also, pixel binning processing may increase a training speed of the artificial neural network model by decreasing the number of data input to the artificial neural network model or the number of data that is a computation target of the loss function.

As another example, the processor 110 may initially perform pixel binning processing on an mixed image before generating a unmixed image from the mixed image using the unmixing matrix. That is, the processor 110 may use the mixed image on which pixel binning processing is performed as an input image of the unmixing matrix. Compared to a case in which pixel binning processing is not performed, the unmixed image generated from the mixed image on which pixel binning processing is performed using the unmixing matrix may improve the training performance of the artificial neural network model for determining the unmixing matrix as an SNR increases and the number of data decreases. Also, in the case of generating the unmixed image using the mixed image on which pixel binning processing is performed, a generation speed of the unmixed image may also increase.

Hereinafter, a method of acquiring a plurality of mixed images according to an example embodiment of disclosure of the present disclosure is described.

As described above with reference to FIG. 4, a conventional method of acquiring an image for each biomolecule in a sample containing a plurality of biomolecules has the limitation that an emission spectrum of a fluorescent substance labeled on each biomolecule should not overlap as much as possible and accordingly, has the limitation that only up to four fluorescent substances may be used simultaneously. Also, to acquire images of four biomolecules contained in a sample using four fluorescent substances and then subsequently acquire an image of another biomolecule contained in the sample, a postprocessing process of removing the existing fluorescent substance needs to be performed before newly labeling the other biomolecule. The post processing process of removing a fluorescent substance may include, for example, a process of deactivating the fluorescent substance or a process of removing antibody labeled with the fluorescent substance.

On the other hand, the image processing method according to the present disclosure does not require the fluorescent substance deactivation or removal process required by the conventional method. Accordingly, in an example embodiment of the present disclosure, a plurality of mixed images may be acquired differently from the conventional method.

A plurality of mixed images according to an example embodiment of the present disclosure may be sequentially generated by performing one round that performs staining and photographing on a sample two or more times. Also, the plurality of mixed images according to the present disclosure may be sequentially generated by performing a single cycle that performs staining and photographing two or more times without a postprocessing process of removing a fluorescent substance. An image processing method according to the present disclosure may have the effect of being able to more quickly and effectively generate a unmixed image for each biomolecule by generating a plurality of unmixed images without the conventional process of removing a fluorescent substance.

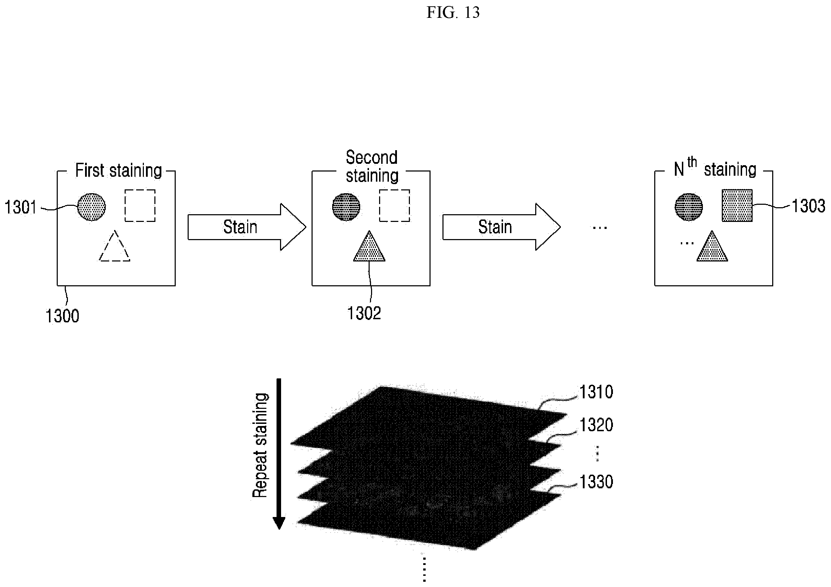

FIG. 13 conceptually illustrates a process of sequentially acquiring a plurality of images according to an example embodiment of the present disclosure. That is, FIG. 13 conceptually illustrates a process of consecutively and sequentially acquiring a plurality of mixed images by repeating one round that includes a process of acquiring an mixed image after labeling a biomolecule contained in a sample with a fluorescent substance several times according to an example embodiment of the present disclosure.

It is assumed that a sample 1300 of FIG. 13 contains N (N is a natural number of 1 or more) biomolecules. Here, when a first biomolecule 1301 contained in the sample 1300 is stained according to first staining, the processor 110 may acquire a first mixed image 1310 by photographing the sample 1300 after the first staining through a photographing unit. The first biomolecule 1301 stained according to the first staining may be displayed on the first mixed image 1310 and remaining unstained biomolecules may not be displayed. Then, when a second biomolecule 1302 contained in the sample 1300 is stained according to second staining, the processor 110 may acquire a second mixed image 1320 by photographing the sample 1300 after the second staining in a wavelength range identical or similar to a wavelength range used when acquiring the first mixed image 1310 through the photographing unit. The first biomolecule 1301 stained according to the first staining and the second biomolecule 1302 stained according to the second staining may be displayed on the second mixed image 1320 and remaining unstained biomolecules may not be displayed. When an $N^{th}$ biomolecule 1303 contained in the sample 1300 is stained according to $N^{th}$ staining by repeating the above process, the processor 110 may acquire an $N^{th}$ mixed image 1330 by photographing the sample 1300 after the $N^{th}$ staining using the photographing unit. The first biomolecule 1301 stained according to the first staining, the second biomolecule 1302 stained according to the second staining, ..., and the $N^{th}$ biomolecule 1303 stained according to the $N^{th}$ staining may be expressed to be included on the $N^{th}$ mixed image 1330. In this manner, when the plurality of mixed images are sequentially acquired, one more biomolecule may be expressed in an mixed image acquired after "(i+1)"-th staining than in an mixed image acquired after "i"-th staining. Hereinafter, in the present disclosure, when compared to the mixed image acquired after the "i"-th staining, one biomolecule additionally expressed on the mixed image acquired after the "i+1"-th staining may be referred to as "biomolecule labelled during an (i+1)-th staining process (i is a natural number of 1 or more). For example, compared to the first mixed image 1310 of FIG. 13, the second biomolecule 1302 additionally expressed on the second mixed image 1320 may be referred to as "biomolecule labeled during a second staining process," and compared to an (N-1)-th mixed image, the N$^{th}$ biomolecule 1303 additionally expressed on the N$^{th}$ mixed image 1330 may be referred to as "biomolecule labeled during an N$^{th}$ staining process."

As described above with FIG. 13, the image processing method according to the present disclosure may generate a unmixed image for a specific biomolecule based on consecutive two or more mixed images among a sequentially acquired plurality of mixed images. Herein, the expressions "two or more mixed images consecutively and sequentially acquired" or "two or more mixed images acquired by sequentially staining the plurality of biomolecules contained in the sample" may represent two or more mixed images acquired by sequentially performing a round that includes staining and photographing for a biomolecule on each of the plurality of biomolecules contained in the sample. For example, two mixed images consecutively and sequentially acquired may include an mixed image captured after i$^{th}$ (i is a natural number of 1 or more) staining and an mixed image captured after (i+1)-th staining. Also, for example, three mixed images consecutively and sequentially acquired may include the mixed image captured after i$^{th}$ staining, the mixed image captured after (i+1)-th staining, and an mixed image captured after (i+2)-th staining. Hereinafter, the expression "plurality of mixed images consecutively and sequentially acquired" may be interchangeably used with the expression "plurality of consecutive mixed images."

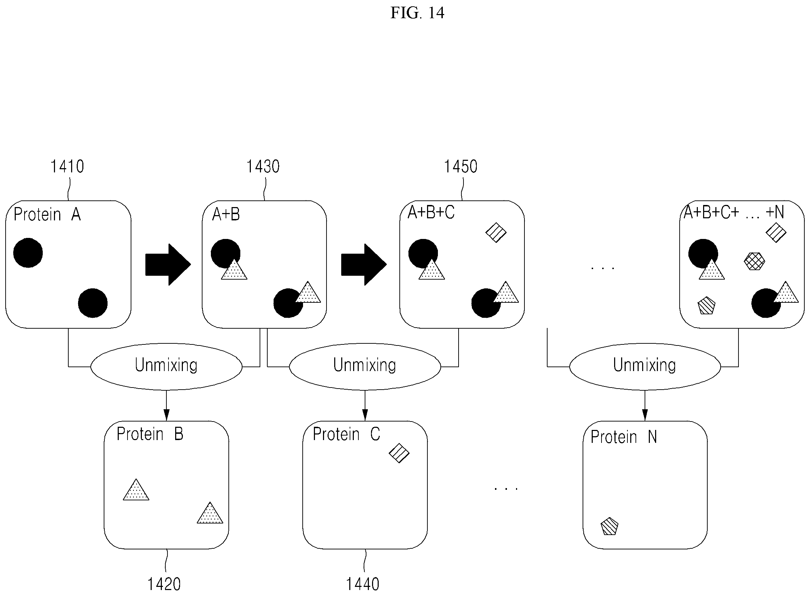

FIG. 14 conceptually illustrates a method of acquiring a unmixed image for at least one biomolecule from consecutive two mixed images among a plurality of mixed images acquired in a consecutive and sequential manner according to an example embodiment of the present disclosure. The processor 110 according to the present disclosure may generate a unmixed image for a biomolecule labeled in an "i+1"-th staining process by performing an operation on the consecutive two mixed image, that is, an mixed image acquired after "i"-th staining and an mixed image acquired after "i+1"-th staining.

In an example embodiment, the processor 110 may acquire a first mixed image 1410 by staining a single biomolecule (e.g., protein A) contained in a sample according to first staining and photographing the sample. Also, the processor 110 may acquire a second mixed image 1430 by staining another biomolecule (e.g., protein B) contained in the sample according to subsequent second staining and by photographing the sample. Also, the processor 110 may acquire a third mixed image 1450 by staining still another biomolecule (e.g., protein C) contained in the sample according to subsequent third staining and by photographing the sample. The processor 110 may perform an operation on consecutive two mixed images based on at least one parameter and may generate a unmixed image for each of at least one biomolecule. For example, the processor 110 may generate a unmixed image 1420 for the biomolecule (i.e., protein B) labeled in a second staining process by performing an operation on the first mixed image 1410 and the second mixed image 1430. Also, the processor 110 may generate a unmixed image 1440 for the biomolecule (i.e., protein C) stained in a third staining process by performing an operation on the second mixed image 1430 and the third mixed image 1450. Meanwhile, the unmixed image for the biomolecule (i.e., protein A) labeled in a first staining process may be acquired as the first mixed image 1410.

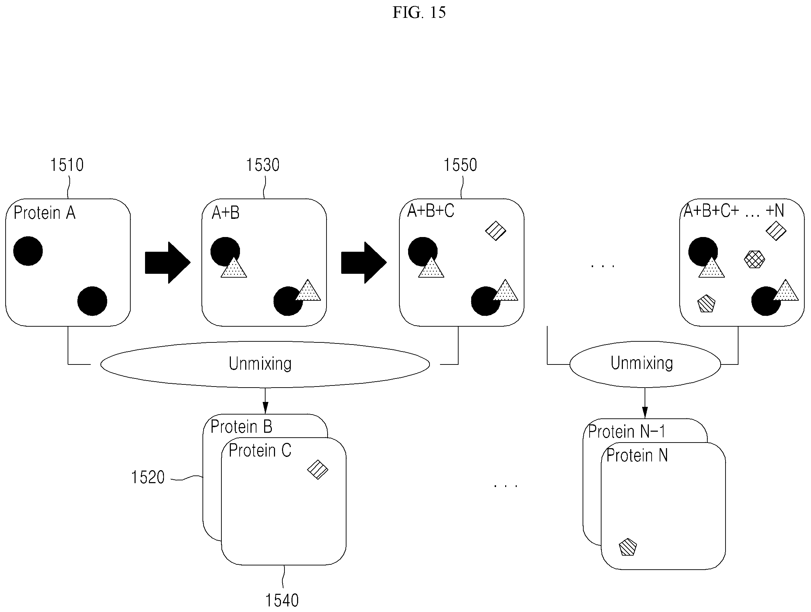

FIG. 15 conceptually illustrates a method of acquiring a unmixed image for at least two biomolecules from consecutive three mixed images among a plurality of mixed images acquired in a consecutive and sequential manner according to an example embodiment of the present disclosure. A first mixed image 1510, a second mixed image 1530, and a third mixed image 1550 shown in FIG. 15 may be acquired in the same manner as the first mixed image 1410, the second mixed image 1430, and the third mixed image 1450 of FIG. 14, respectively. The processor 110 may perform an operation on the consecutive three mixed images based on at least one parameter and may generate a unmixed image for each of at least two biomolecules. For example, the processor 110 may generate a unmixed image 1520 for a biomolecule (i.e., protein B) stained in a second staining process and a unmixed image 1540 for a biomolecule (i.e., protein C) stained in a third staining process by simultaneously operating the first mixed image 1510, the second mixed image 1530, and the third mixed image 1550. Meanwhile, the unmixed image for the biomolecule (i.e., protein A) stained in a first staining process may be acquired as the first mixed image 1510.

Although a method of acquiring a unmixed image for a biomolecule based on consecutive two or three mixed images are described above with reference to FIG. 14 or 15, this does not limit the present disclosure and the present disclosure may generate a unmixed image for a biomolecule based on consecutive two or more, that is, a predetermined number of mixed images. The above description is made using protein as an example of a biomolecule, but is only an assumption for clarity of description and does not limit the present disclosure. In the following, for clarity of description, a method of acquiring a unmixed image based on consecutive two mixed images is described.

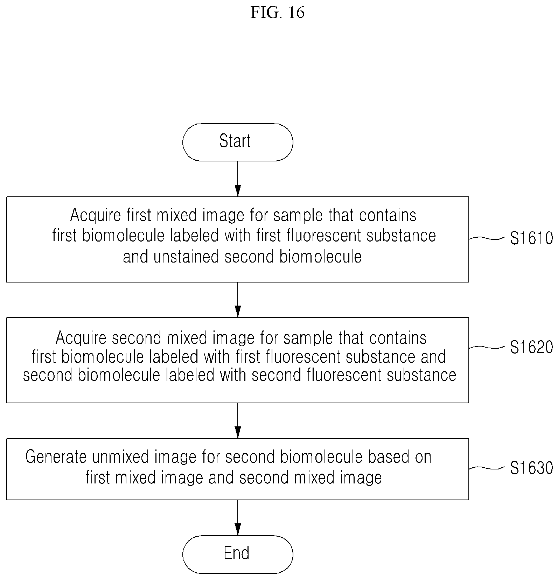

FIG. 16 is a flowchart illustrating an operation of the server 100 that generates a unmixed image for at least one biomolecule based on consecutive two mixed images according to an example embodiment of the present disclosure.

The processor 110 may acquire a first mixed image for a sample that contains a first biomolecule stained with a first fluorescent substance and an unstained second biomolecule (S1610). In the example embodiment described in FIG.

16, the first biomolecule may be a biomolecule stained with a specific fluorescent substance in an $i^{th}$ staining process (i.e., $i^{th}$ staining process) for the sample. The processor 110 may acquire an mixed image for the sample with the stained first biomolecule through a photographing unit (not shown) or may acquire an mixed image by receiving an mixed image for the sample with the stained first biomolecule from an external device or the user terminal 200.

Then, the processor 110 may acquire a second mixed image for the sample that contains the first biomolecule stained with the first fluorescent substance and a second biomolecule stained with a second fluorescent substance (S1620). In the example embodiment of FIG. 16, the second biomolecule may be a biomolecule stained with a specific fluorescent substance in an (i+1)-th staining process (i.e., (i+1)-th staining process) for the sample. That is, the first mixed image acquired in operation S1610 and the second mixed image may be two images that are consecutively and sequentially acquired. That is, the first biomolecule may be a biomolecule stained in the $i^{th}$ staining process and the second biomolecule may be a biomolecule stained in the (i+1)-th staining process. The processor 110 may acquire an mixed image for the sample with the stained second biomolecule through the photographing unit (not shown), or may acquire an mixed image by receiving an mixed image for the sample with the stained second biomolecule from the external device or the user terminal 200.

Hereinafter, unless the context clearly indicates otherwise, the first mixed image may refer to an mixed image captured after labeling the first biomolecule with the first fluorescent substance in the $i^{th}$ staining process for the specific sample, and the second mixed image may refer to an mixed image captured after labeling the second biomolecule with the second fluorescent substance in the (i+1)-staining process for the same specific sample. The first biomolecule may be displayed on the first mixed image and the second biomolecule may not be displayed. Also, all of the first biomolecule and the second biomolecule may be displayed on the second mixed image.

Then, the processor 110 may generate a unmixed image for the second biomolecule based on the first mixed image and the second mixed image (S1630). In an example embodiment, the processor 110 may operate the first mixed image and the second mixed image using the unmixing matrix and may generate the unmixed image for the second biomolecule based on operation results. Also, a value of at least one element included in the unmixing matrix may be determined based on training of an artificial neural network model. The common description related to the unmixing matrix or the artificial neural network model is made above and repeated description will be omitted and difference will be described.

In an example embodiment, each of the first mixed image and the second mixed image consecutively and sequentially acquired for the same sample may be an image captured by detecting light in the same specific wavelength range from the sample. In detail, the first mixed image may be an image captured by detecting light in a first wavelength range in the light emitted from the sample that contains the first biomolecule stained with the first fluorescent substance and the second mixed image may be an image captured by detecting light in a second wavelength range in the light emitted from the sample that contains the second biomolecule stained with the second fluorescent substance. Here, if the first wavelength range and the second wavelength range are the same, the first mixed image and the second mixed image may be images captured by detecting light in the same specific wavelength range. Herein, the term "light in specific wavelength range" may refer to light having a wavelength in a specific range. For example, the light in the specific wavelength range may refer to light having a wavelength of 400 nm or more and 450 nm or less. To capture an mixed image by detecting the light in the specific wavelength range, the wavelength range of light detected by the photographing unit may be adjusted, the light in the specific wavelength range may be irradiated to the sample, or a predetermined filter may be installed between the photographing unit and the sample.

In an example embodiment, the first mixed image and the second mixed image consecutively and sequentially acquired for the same sample may be images acquired based on the same emission filter (hereinafter, also referred to as "sixth emission filter").

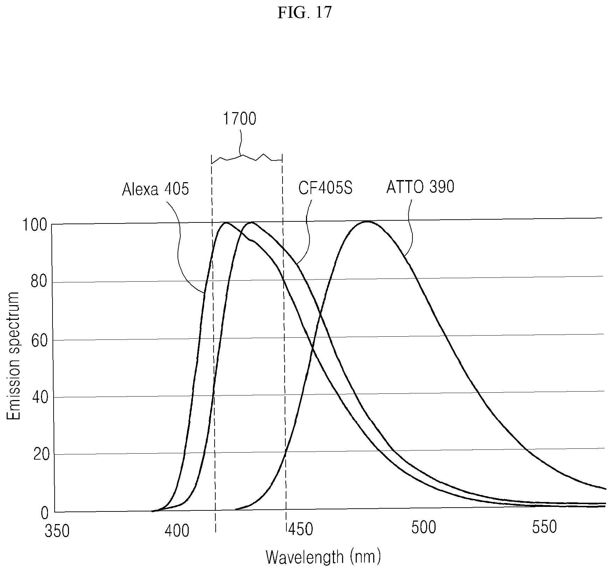

FIG. 17 is a graph showing an example of emission spectra of a plurality of fluorescent substances and a wavelength range in which a specific emission filter passes light. As described above, an mixed image may be acquired by irradiating light of a specific wavelength to which a fluorescent substance responds, to the fluorescent substance, by filtering light emitted from the resulting excited fluorescent substance through a corresponding emission filter, and by photographing the light that the emission filter passes. For example, it may be assumed that a first mixed image is an image acquired after labeling a first biomolecule contained in a sample with one of fluorescent substances "Alexa 405," "CF405S," and "ATTO 390," and a second mixed image is an image acquired after labeling a second biomolecule contained in the sample with one of fluorescent substances "Alexa 405," "CF405S," and "ATTO 390." Here, the first mixed image and the second mixed image may be images acquired, for example, based on the same sixth emission filter. For example, when a wavelength range 1700 in which the sixth emission filter passes light is as shown in a section indicated with dotted lines in FIG. 17, the first mixed image and the second mixed image may be acquired by equally detecting the light in the wavelength range 1700 that the sixth emission filter passes.

According to an example embodiment of the present disclosure, a first fluorescent substance used to acquire the first mixed image and a second fluorescent substance used to acquire the second mixed image may be the same fluorescent substance. For example, the first fluorescent substance and the second fluorescent substance may be the same one fluorescent substance as one fluorescent substance among "Alexa 405," "Alexa 488," "Alexa 546," "Alexa 647," "CF594," "CF405S," "ATTO 390," and other various fluorescent substances.

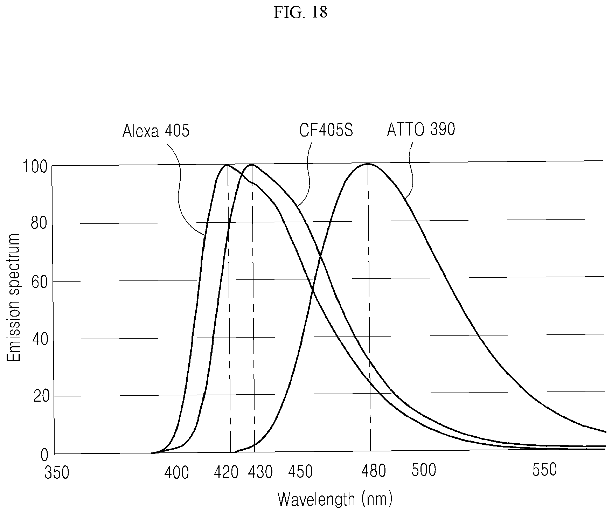

According to an example embodiment, the first fluorescent substance used to acquire the first mixed image and the second fluorescent substance used to acquire the second mixed image may be fluorescent substances having similar emission spectra. Herein, two or more fluorescent substances having similar emission spectra may be expressed as "fluorescent substance combination having similar emission spectra." Hereinafter, a method of determining "fluorescent substance combination having similar emission spectra" is described with reference to FIG. 18. FIG. 18 is a graph showing an example of emission spectra of a plurality of fluorescent substances and a wavelength value at which intensity of a signal is maximum in each emission spectrum.

The processor 110 may determine the fluorescent substance combination having similar emission spectra based on intensity of a signal within the emission spectrum of each fluorescent substance. In the following, for clarity of description, description is made with the assumption that the fluorescent substance combination having similar emission spectra includes two fluorescent substances.

If wavelength values at which intensity of emission signal is maximum in the emission spectrum of each of the two fluorescent substances satisfy a predetermined condition (hereinafter, "fluorescent substance combination condition"), the processor 110 may determine the two fluorescent substances as the fluorescent substance combination having similar emission spectra. In detail, with the assumption that a first mixed image is an image captured after labeling a first biomolecule contained in a sample with a first fluorescent substance and a second mixed image is an image captured after labeling a second biomolecule contained in the sample with a second fluorescent substance, when a first wavelength value at which intensity of emission signal within the emission spectrum of the first fluorescent substance is maximum and a second wavelength value at which intensity of emission signal within the emission spectrum of the second fluorescent substance is maximum satisfy the predetermined condition, the first fluorescent substance and the second fluorescent substance may correspond to the fluorescent substance combination having similar emission spectra.

In an example embodiment regarding the fluorescent substance combination condition, when the first wavelength value at which intensity of emission signal within the emission spectrum of the first fluorescent substance is maximum and the second wavelength value at which intensity of emission signal within the emission spectrum of the second fluorescent substance is maximum are less than or equal to a predetermined threshold, the processor 110 may determine that the fluorescent substance combination condition is satisfied. For example, as shown in FIG. 18, a wavelength value at which intensity of an emission signal within the emission spectrum of "Alexa 405" is maximum (hereinafter, "maximum wavelength value of Alexa 405") may be about 420 nm, and a wavelength value at which intensity of an emission signal within the emission spectrum of "CF405S" is maximum (hereinafter, "maximum wavelength value of CF405S") may be about 430 nm. Also, a wavelength value at which intensity of an emission signal within the emission spectrum of "ATTO 390" is maximum (hereinafter, "maximum wavelength value of ATTO 390") may be about 480 nm.

In an example embodiment regarding FIG. 18, when the predetermined threshold of the processor 110 is 20 nm, a difference between the maximum wavelength value of Alexa 405 (e.g., 420 nm) and the maximum wavelength value of CF405S (e.g., 430 nm) is 10 nm and less than or equal to the predetermined threshold and Alexa 405 and CF405S may be determined to satisfy the fluorescent substance combination condition accordingly. On the other hand, a difference between the maximum wavelength value of Alexa 405 and the maximum wavelength value ATTO 390 (e.g., 480 nm) is 60 nm and is not less than or equal to the predetermined threshold and Alexa 405 and ATTO 390 may be determined to not satisfy the fluorescent substance combination condition accordingly. Likewise, even in the case of CF405S and ATTO 390, a difference between the respective maximum wavelength values is 50 nm and they may be determined to not satisfy the fluorescent substance combination condition accordingly.

In an example embodiment of FIG. 18, when the predetermined threshold of the processor 110 is 60 nm, a difference between the maximum wavelength value of Alexa 405 (e.g., 420 nm) and the maximum wavelength value of CF405S (e.g., 430 nm) is 10 nm and less than or equal to the predetermined threshold and Alexa 405 and CF405S may be determined to satisfy the fluorescent substance combination condition accordingly. Also, a difference between the maximum wavelength value of Alexa 405 and the maximum wavelength value of ATTO 390 (e.g., 480 nm) is 60 nm and less than or equal to the predetermined threshold and Alexa 405 and ATTO 390 may be determined to satisfy the fluorescent substance combination condition. Likewise, in the case of CF405S and ATTO 390, a difference between the respective maximum wavelength values is 50 nm and they may be determined to satisfy the fluorescent substance combination condition accordingly. In another example embodiment regarding the fluorescent substance combination condition, when a ratio of a smaller wavelength value to a larger wavelength value between the first wavelength value at which intensity of emission signal within the emission spectrum of the first fluorescent substance is maximum and the second wavelength value at which intensity of emission signal within the emission spectrum of the second fluorescent substance is maximum is greater than or equal to the predetermined threshold, the processor 110 may determine that the fluorescent substance combination condition is satisfied. For example, when the predetermined threshold of the processor 110 is 0.95, a ratio of a smaller wavelength value to a larger wavelength value between the maximum wavelength value of Alexa 405 and the maximum wavelength value of CF405S is about 0.977 (=420/430) and greater than or equal to the predetermined threshold and thus, Alexa 405 and CF405S may be determined to satisfy the fluorescent substance combination condition. On the contrary, since a ratio of a smaller wavelength value to a larger wavelength value between the maximum wavelength value of Alexa 405 and the maximum wavelength value of ATTO 390 is 0.875 (=420/480) and less than the predetermined threshold, Alexa 405 and ATTO 390 may be determined to not satisfy the fluorescent substance combination condition. Likewise, in the case of CF405S and ATTO 390, the ratio between the respective wavelength values is about 0.896 (=430/480) and less than the predetermined threshold and they may be determined to not satisfy the fluorescent substance combination condition accordingly.

A detailed numerical value for the predetermined threshold or the predetermined threshold ratio described above is provided as an example only and does not limit the present disclosure. The predetermined threshold value or the predetermined threshold ratio may be set as various real number values according to a type of a fluorescent substance used in a staining process.

According to the conventional image processing method described with reference to FIG. 4, to acquire an accurate image for each of a plurality of biomolecules, fluorescent substances need to be selected such that emission spectra of fluorescent substances labeling the plurality of biomolecules, respectively, do not overlap as much as possible. On the contrary, in the case of generating a plurality of unmixed images from a plurality of mixed images according to the image processing method according to the present disclosure, the limitation of the conventional method as above may be greatly reduced. Further, in the process of sequentially acquiring mixed images by consecutively staining a plurality of biomolecules contained in a sample, the same fluorescent substance or similar fluorescent substances may be used for each staining round. Accordingly, the plurality of mixed images acquired consecutively and sequentially according to the present disclosure may be acquired based on light in the same or similar specific wavelength range in the method described with the aforementioned some example embodiments, and the plurality of mixed images may be quickly and easily acquired compared to the conventional method without an additional process, such as replacement of an emission filter and removal of a fluorescent substance.

In an additional example embodiment according to the disclosure of the present specification, when a plurality of mixed images are images acquired by consecutively and sequentially staining a plurality of biomolecules contained in a sample, an unmixing matrix may be a triangular matrix.

In an example embodiment regarding the triangular matrix of the present disclosure, when the plurality of mixed images include two mixed images, the unmixing matrix that is the triangular matrix may be expressed as Equation 14 below.

[Equation 14]

$$U = \begin{bmatrix} 1 & 0 \\ \alpha & 1 \end{bmatrix}$$

In Equation 14, parameter $\alpha$ included in the unmixing matrix (U) may be a matrix for a weighted sum of mixed images. In the example of Equation 14, two mixed images may be referred to as a first mixed image ($Y_1$) captured by staining a first biomolecule contained in a sample in an $i^{th}$ staining process and a second mixed image ($Y_2$) captured by staining a second biomolecule contained in the same sample in an (i+1)-th staining process (i is a natural number of 1 or more). The processor 110 may perform an operation for acquiring a unmixed image for the second biomolecule through a weighted sum of the first mixed image ($Y_1$) and the second mixed image ($Y_2$) using the unmixing matrix that is the triangular matrix. For example, the processor 110 may operate equation expressed as $X_2 = \alpha Y_1 + Y_2$ based on the unmixing matrix (U) of Equation 23 and may acquire a unmixed image ($X_2$) for the second biomolecule as operation results. Meanwhile, when the first mixed image ($Y_1$) is an image acquired after staining the first biomolecule contained in the sample in an initial staining (i.e., first staining) process for the sample, a unmixed image ($X_1$) for the first biomolecule may be acquired as the first mixed image ($Y_1$).

In another example embodiment regarding the triangular matrix of the present disclosure, when the plurality of mixed images include three mixed images, the unmixing matrix that is the triangular matrix may be expressed as Equation 15 below.

[Equation 15]

$$U = \begin{pmatrix} 1 & 0 & 0 \\ \alpha & 1 & 0 \\ \beta & \gamma & 1 \end{pmatrix}$$

In Equation 15, each of a plurality of parameters $\alpha$, $\beta$, and $\gamma$ included in the unmixing matrix ($U$) may be a parameter for a weighted sum of mixed images. In the example of Equation 15, three mixed images may be referred to as the first mixed image ($Y_1$) captured by staining the first biomolecule contained in the $i^{th}$ staining process, the second mixed image ($Y_2$) captured by staining the second biomolecule contained in the same sample in the (i+1)-th staining process, and a third mixed image ($Y_3$) captured by staining a third biomolecule contained in the same sample in an (i+2)-th staining process (i is a natural number of 1 or more), respectively. The processor 110 may perform an operation for acquiring a unmixed image for the second biomolecule and a unmixed image for the third biomolecule through a weighted sum of the first mixed image ($Y_1$), the second mixed image ($Y_2$), and the third mixed image ($Y_3$) using the unmixing matrix that is the triangular matrix. For example, the processor 110 may operate equations expressed as $X_2 = \alpha Y_1 + Y_2$ and $X_3 = \beta Y_1 + \gamma Y_2 + Y_3$ based on the unmixing matrix ($U$) of Equation 15 and may acquire a unmixed image ($X_2$) for the second biomolecule and a unmixed image ($X_3$) for the third biomolecule as operation results. Meanwhile, when the first mixed image ($Y_1$) is an image acquired after staining the first biomolecule contained in the sample in an initial staining (i.e., first staining process) for the sample, a unmixed image ($X_1$) for the first biomolecule may be acquired as the first mixed image ($Y_1$).

In the detailed description based on Equations 14 and 15 above, the triangular matrix as the unmixing matrix is described as a lower triangular matrix, but this does not limit the present disclosure and the triangular matrix of the present disclosure may be an upper triangular matrix. As such, when the plurality of mixed images are images acquired by consecutively and sequentially staining the plurality of biomolecules contained in the sample, the unmixing matrix according to the present disclosure may be the triangular matrix and accordingly, the processor 110 may acquire a unmixed image for at least one biomolecule by more quickly performing a matrix operation.

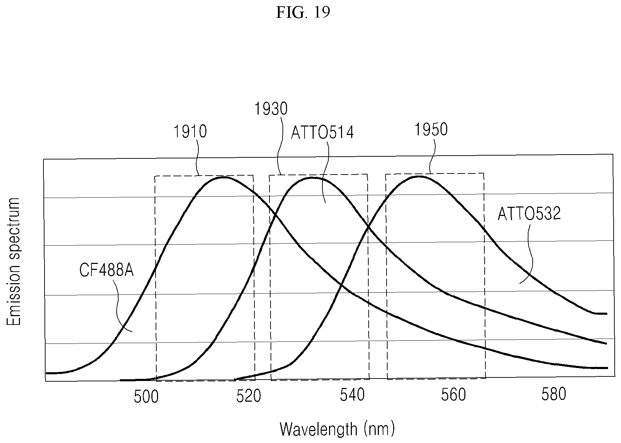

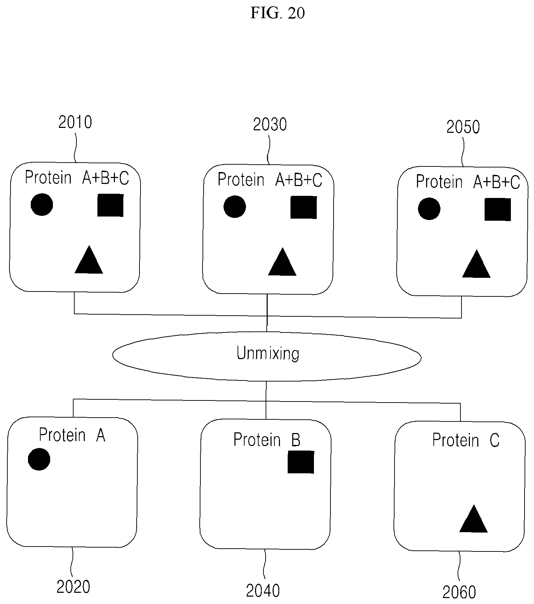

FIGS. 19 and 20 illustrate a case of labeling two or more biomolecules contained in a sample with two or more fluorescent substances of which emission spectra overlap and then acquiring two or more mixed images in different two wavelength ranges according to an example embodiment of the present disclosure.

In the case of staining two or more biomolecules "A," "B," and "C" inside a sample using three fluorescent substances (e.g., CF488A, ATTO514, and ATTO532) of which emission spectra overlap one another, respectively, and acquiring images in three wavelength range 1910, 1930, and 1950, respectively, three biomolecules "A," "B," and "C" may be expressed on a first mixed image 2010 acquired in the first wavelength range 1910, the three biomolecules "A," "B," and "C" may be expressed on a second mixed image 2030 acquired in the second wavelength range 1930, and the three biomolecules "A," "B," and "C" may be expressed on a third mixed image 2050 acquired in the third wavelength range 1950. By applying unmixing according to the disclosed technology to the first mixed image 2010, the second mixed image 2030, and the third mixed image 2050, only the biomolecule "A" may be displayed on a first unmixed image 2020, only the biomolecule "B" may be displayed on a second unmixed image 2040, and only the biomolecule "C" may be displayed on a third unmixed image 2060. Through this, by simultaneously using the more number of fluorescent substances compared to the conventional art in one staining and imaging round simultaneously using fluorescent substances with overlapping emission spectra that may not be simultaneously used in the conventional art, the more number of biomolecules may be simultaneously imaged. Although a case of imaging three biomolecules using three fluorescent substances with overlapping emission spectra is described above, the same technique may also be applied to two or four or more fluorescent substances of which emission spectra overlap. It is only an assumption for clarity of description and does not limit the present disclosure. Although the above description is made using protein as an example of a biomolecule, it is only an assumption for clarity of description and does not limit the present disclosure.

In the flowchart according to the disclosure of the present specification, each of operations of the method or the algorithm is described in sequential order, but each of the operations may be performed in order that may be arbitrarily combined, in addition to being performed sequentially. Description related to the flowchart herein does not exclude making changes or modifications to the method or the algorithm, and also does not imply that an arbitrary operation is essential or desirable. In an example embodiment, at least some operations may be performed in parallel, iteratively, or heuristically. In an example embodiment, at least some operations may be omitted, or another operation may be added.

Various example embodiments according to the disclosure of the present specification may be implemented as software on a machine-readable storage medium. The software may be software for implementing various example embodiments of the present specification. The software may be inferred from various example embodiments of the present specification by programmers in the art to which the disclosure of the present specification pertains. For example, the software may be a program that includes a machine-readable instruction (e.g., code or code segment). A device may be, for example, a computer as a device that is operable according to an instruction called from a storage medium. In an example embodiment, the device may be a computing device according to various example embodiments of the present specification. In an example embodiment, a processor of the device may execute the called instruction and cause components of the device to perform a function corresponding to the instruction. In an example embodiment, the processor may be the processor 110, 210 according to example embodiments of the present specification. The storage medium may refer to any type of machine-readable recording medium in which data is stored. The storage medium may include, for example, a read only memory (ROM), a random access memory (RAM), a CD-ROM, a magnetic tape, floppy disk, and an optical data storage device. In an example embodiment, the storage medium may be the memory 130, 230. In an example embodiment, the storage medium may be implemented in a distributed form, such as in a network-connected computer system. The software may be distributed, stored, and executed on a computer system. The storage medium may be a non-transitory storage medium. The non-transitory storage medium may refer to a tangible medium regardless of whether data is stored semi-permanently or temporarily, and does not include signals that are transmitted transitorily.

Although the technical spirit according to the disclosure of the present specification is described above through the various example embodiments, the technical spirit according to the disclosure of the present specification includes various substitutions, modifications, and changes that may be made within the range understandable by one of ordinary skill in the art to which the disclosure of the present specification pertains. However, it should be understood that such substitutions, modifications, and changes may be included within the attached claims.

**Claims**

1. An image processing method performed by an electronic device comprising at least one processor and at least one memory that stores instructions to be executed by the at least one processor, the method comprising:

   acquiring a plurality of mixed images for a sample that contains a plurality of biomolecules; and
   generating a unmixed image for at least one biomolecule among the plurality of biomolecules from the plurality of mixed images using an unmixing matrix,
   wherein a value of at least one element included in the unmixing matrix is determined based on training of an artificial neural network model.

2. The method of claim 1, wherein the unmixing matrix includes at least one element that determines a linear superposition ratio between the plurality of mixed images.

3. The method of claim 1, wherein the plurality of mixed images are acquired in a consecutive and sequential manner by repeating a single round that includes a process of labeling a biomolecule in the sample with a fluorescent substance and acquiring a single mixed image.

4. The method of claim 1, wherein the plurality of mixed images are two or more mixed images acquired in two or more wavelength ranges by labeling two or more biomolecules in the sample with two or more fluorescent substances of which emission spectra overlap, respectively.

5. The method of claim 1, wherein the artificial neural network model is trained using two or more data sets generated based on a plurality of unmixed images generated using the unmixing matrix.

6. The method of claim 5, wherein a first data set included in the two or more data sets includes at least one piece of data that includes values of pixels corresponding to the same location in each of the plurality of unmixed images.

7. The method of claim 5, wherein a second data set included in the two or more data sets includes at least one piece of data that includes values of pixels corresponding to a random location from each of the plurality of unmixed images.

8. The method of claim 1, wherein the artificial neural network model is trained to distinguish two or more data sets generated based on a plurality of unmixed images generated using the unmixing matrix.

9. The method of claim 8, wherein the artificial neural network model generates a classification value for classifying input specific data into one of the two or more data sets.

10. The method of claim 8, wherein the artificial neural network model receives first input data and second input data, and generates a dependency evaluation value for the plurality of unmixed images based on the first input data and the second input data.

11. The method of claim 10, wherein the dependency evaluation value includes at least one of distinguishing capability between the first input data and the second input data, a mutual information amount, a Kullback-Leibler divergence value, a cross-entropy value, a rand index, or a loss function value of the artificial neural network model.

12. The method of claim 1, wherein the unmixing matrix and the artificial neural network model are trained through adversarial training.

13. The method of claim 12, wherein the unmixing matrix is trained by additionally using a specific loss function that prevents a value of each pixel of a unmixed image from being negative.

14. The method of claim 1, wherein the unmixing matrix and the artificial neural network model are trained through adversarial training,

a value of at least one element included in the unmixing matrix is updated to decrease accuracy of the classification value generated by the artificial neural network model, and
a value of at least one parameter included in the artificial neural network model is updated to increase the accuracy of the classification value.

15. The method of claim 1, wherein the unmixing matrix and the artificial neural network model are trained through adversarial training,

a value of at least one element included in the unmixing matrix is updated to decrease the dependency evaluation value generated by the artificial neural network model, and
a value of at least one parameter included in the artificial neural network model is updated to increase the dependency evaluation value.

16. The method of claim 1, further comprising:
performing pixel binning processing on each of the plurality of mixed images.

17. The method of claim 1, wherein the artificial neural network model is trained based on a plurality of pixel binning processed unmixed images acquired by performing pixel binning processing on a plurality of unmixed images generated by the unmixing matrix, respectively.

18. An electronic device comprising:

at least one processor; and
at least one memory configured to store instructions to be executed by the at least one processor,
wherein the at least one processor is configured to,
acquire a plurality of mixed images for a sample that contains a plurality of biomolecules, and
generate a unmixed image for at least one biomolecule among the plurality of biomolecules from the plurality of mixed images using an unmixing matrix, and
a value of at least one element included in the unmixing matrix is determined based on training of an artificial neural network model.

19. The electronic device of claim 18, wherein the artificial neural network model is trained to distinguish two or more data sets generated based on a plurality of unmixed images generated using the unmixing matrix.

20. The electronic device of claim 18, wherein the unmixing matrix and the artificial neural network model are trained through adversarial training.

FIG. 1

Server(100)

Communication network(300)

User terminal (200)

FIG. 2

100

110

Processor

130

Memory

150

Output unit

BUS

Communication
interface

Input unit

120

140

FIG. 3

200

210

230

250

Processor

Memory

Output unit

BUS

Communication
interface

Input unit

220

240

FIG. 4

FIG. 5

510-n   510

510-2

510-1

530-n   530

530-2

530-1

FIG. 6

Start

Acquire plurality of mixed images related to sample
that contains plurality of biomolecules — S610

Generate plurality of unmixed images corresponding to
plurality of biomolecules from plurality of mixed images
using unmixing matrix — S620

End

FIG. 7

Start

S710 — Acquire plurality of mixed images related to sample that contains plurality of biomolecules

S720 — Generate plurality of unmixed images from plurality of mixed images using unmixing matrix

S730 — Compute dependency evaluation value between plurality of unmixed images based on plurality of unmixed images generated using unmixing matrix

S740 — Train unmixing matrix and artificial neural network model through adversarial training based on dependency evaluation value and update value of element included in unmixing matrix and/or parameter of artificial neural network

S745 — Is predetermined threshold condition satisfied?

No

Yes

S750 — Generate unmixed image for at least one biomolecule among plurality of biomolecules from plurality of mixed images using unmixing matrix

End

FIG. 8

FIG. 9

FIG. 10

```
          ┌──────────────┐
          │    Start     │
          └──────┬───────┘
                 │
                 ▼
┌──────────────────────────────────────────┐
│ Acquire value of pixel at same location   │        S1010
│ included in each of plurality of          │
│ unmixed images                            │
└──────────────────┬───────────────────────┘
                   │
                   ▼
┌──────────────────────────────────────────┐
│ Generate pixel value ordered pair based   │        S1020
│ on values of pixels at same location      │
└──────────────────┬───────────────────────┘
                   │
                   ▼
┌──────────────────────────────────────────┐
│ Generate plurality of pixel value ordered │        S1030
│ pairs by repeating operation of           │
│ generating pixel value ordered pair       │
│ predetermined number of times             │
└──────────────────┬───────────────────────┘
                   │
                   ▼
          ┌──────────────┐
          │     End      │
          └──────────────┘
```

FIG. 11

```
                    ┌─────────────┐
                    │    Start    │
                    └──────┬──────┘
                           │
                           ▼
    ┌──────────────────────────────────────────────────┐
    │ Acquire pixel value at random location included   │      S1110
    │ in each of plurality of unmixed images            │
    └──────────────────────┬───────────────────────────┘
                           │
                           ▼
    ┌──────────────────────────────────────────────────┐
    │ Generate pixel value ordered pair based on pixel  │      S1120
    │ values at random location                         │
    └──────────────────────┬───────────────────────────┘
                           │
                           ▼
    ┌──────────────────────────────────────────────────┐
    │ Generate plurality of pixel value ordered pairs   │
    │ by repeating operation of generating pixel value  │      S1130
    │ ordered pair predetermined number of times        │
    └──────────────────────┬───────────────────────────┘
                           │
                           ▼
                    ┌─────────────┐
                    │     End     │
                    └─────────────┘
```

FIG. 12

1210

Sampling from joint probability distribution

Sampling from product of marginal probability distribution

1231

1233

1250

$f_\emptyset[\cdot]$

$E_{P_{X_1 X_2}}[f_\emptyset] - \log(E_{P_{X_1} P_{X_2}}[e^{f_\emptyset}])$

Result value

FIG. 13

FIG. 14

EP 4 583 049 A1

FIG. 15

FIG. 16

Start

Acquire first mixed image for sample that contains
first biomolecule labeled with first fluorescent substance
and unstained second biomolecule — S1610

Acquire second mixed image for sample that contains
first biomolecule labeled with first fluorescent substance and
second biomolecule labeled with second fluorescent substance — S1620

Generate unmixed image for second biomolecule based on
first mixed image and second mixed image — S1630

End

FIG. 17

FIG. 18

FIG. 19

FIG. 20

2010     2030     2050

Protein A+B+C

Unmixing

Protein A

Protein B

Protein C

2020     2040     2060

## INTERNATIONAL SEARCH REPORT

| International application No. |
| --- |
| **PCT/KR2023/012865** |

**A. CLASSIFICATION OF SUBJECT MATTER**

**G06T 7/11**(2017.01)i; **G06T 7/174**(2017.01)i; **G06T 7/00**(2006.01)i; **G06V 20/69**(2022.01)i; **G06N 3/08**(2006.01)i; **G06T 7/62**(2017.01)i

According to International Patent Classification (IPC) or to both national classification and IPC

**B. FIELDS SEARCHED**

Minimum documentation searched (classification system followed by classification symbols)

G06T 7/11(2017.01); G01N 21/64(2006.01); G06K 9/00(2006.01); G06K 9/62(2006.01); G06N 20/00(2019.01); G06N 3/08(2006.01); G06T 7/13(2017.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생체 분자(biomolecule), 언믹싱(unmixing), 삼각 행렬(triangular matrix), 신경망 (neural network), 경쟁적 학습(adversarial training)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2021-0087869 A (KOREA ADVANCED INSTITUTE OF SCIENCE AND TECHNOLOGY) 13 July 2021 (2021-07-13)<br>See paragraphs [0027]-[0041] and [0100]-[0138]; and claim 1. | 1-20 |
| Y | US 2020-0226462 A1 (ROOM4 GROUP LIMITED) 16 July 2020 (2020-07-16)<br>See paragraphs [0015]-[0016] and [0025]. | 1-20 |
| Y | US 2021-0209388 A1 (DEMIR, Ilke et al.) 08 July 2021 (2021-07-08)<br>See paragraphs [0095]-[0105] and [0269]. | 10-15,20 |
| Y | US 2020-0349340 A1 (VENTANA MEDICAL SYSTEMS, INC.) 05 November 2020 (2020-11-05)<br>See paragraphs [0114] and [0142]. | 16-17 |
| A | KR 10-2020-0031687 A (FUJIFILM CORPORATION) 24 March 2020 (2020-03-24)<br>See claims 1-9. | 1-20 |

☐ Further documents are listed in the continuation of Box C.   ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **21 December 2023** | **21 December 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/012865**

| Patent document cited in search report | | | Publication date (day/month/year) | Patent family member(s) | | | Publication date (day/month/year) |
|---|---|---|---|---|---|---|---|
| KR | 10-2021-0087869 | A | 13 July 2021 | KR | 10-2351249 | B1 | 14 January 2022 |
| | | | | US | 11703454 | B2 | 18 July 2023 |
| | | | | US | 2021-0208076 | A1 | 08 July 2021 |
| US | 2020-0226462 | A1 | 16 July 2020 | CN | 110023994 | A | 16 July 2019 |
| | | | | CN | 110023994 | B | 30 October 2020 |
| | | | | EP | 3692497 | A1 | 12 August 2020 |
| | | | | EP | 3692497 | B1 | 03 November 2021 |
| | | | | US | 11232354 | B2 | 25 January 2022 |
| | | | | WO | 2019-068415 | A1 | 11 April 2019 |
| US | 2021-0209388 | A1 | 08 July 2021 | US | 11687778 | B2 | 27 June 2023 |
| US | 2020-0349340 | A1 | 05 November 2020 | EP | 3345122 | A1 | 11 July 2018 |
| | | | | EP | 3345122 | B1 | 30 June 2021 |
| | | | | JP | 2018-529950 | A | 11 October 2018 |
| | | | | JP | 6725646 | B2 | 22 July 2020 |
| | | | | US | 10747986 | B2 | 18 August 2020 |
| | | | | US | 11361561 | B2 | 14 June 2022 |
| | | | | US | 2018-0204048 | A1 | 19 July 2018 |
| | | | | WO | 2017-037180 | A1 | 09 March 2017 |
| KR | 10-2020-0031687 | A | 24 March 2020 | EP | 3690017 | A1 | 05 August 2020 |
| | | | | EP | 3690017 | A4 | 18 November 2020 |
| | | | | JP | 7026694 | B2 | 28 February 2022 |
| | | | | KR | 10-2431217 | B1 | 09 August 2022 |
| | | | | US | 11257301 | B2 | 22 February 2022 |
| | | | | US | 2020-0184192 | A1 | 11 June 2020 |
| | | | | WO | 2019-065105 | A1 | 04 April 2019 |

Form PCT/ISA/210 (patent family annex) (July 2022)